# EUROPEAN PATENT APPLICATION

(11) **EP 1 953 636 A2**
(43) Date of publication of application: **06.08.2008**
(21) Application number: 08250048.9
(22) Date of filing: 07.01.2008
(51) Int. Cl.: G06F 3/06

(54) **Storage module and capacity pool free capacity adjustment method**

(30) Priority: 29.01.2007 JP 2007018142
(71) Applicant: Hitachi, Ltd., Chiyoda-ku Tokyo 100-8280 (JP)
(72) Inventor: Kawaguchi, Tomohiro, Hitachi Ltd. Intellectual Property Group, Tokyo 100-8220 (JP)
(74) Representative: Hodsdon, Stephen James

(57) **Abstract**

The free region of a capacity pool is managed in a capacity pool structure management table (11112-14) stored in a memory (11112), and if a capacity of a storage region that is to be assigned newly to a virtual volume by a processor is equal to or greater than a capacity of a free region of the capacity pool, or if the capacity of the free region of the capacity pool after assignment of a storage region to a virtual volume is less than a prescribed threshold value, then the data of at least any one virtual volume in the capacity pool, is migrated to another storage module, and the storage region of a HDD that was assigned to the virtual volume in question is added to the free capacity of the capacity pool, as a free region.

## Description

Conventionally, a method is commonly used in which a plurality of storage media are gathered in a storage device and are handled logically as one single storage volume, by integrated control of the plurality of storage media. By adopting a composition known as a RAID (Redundant Array of Inexpensive Disks) in a storage module of this kind, it has become possible to achieve high performance with parallel access, and high availability with data redundancy.

In recent years, with the rise in the amounts of information being handled, the storage capacity required in storage devices has also increased. The following two technologies can be cited as examples of means for resolving this problem.

The first technology is one which uses a dynamic capacity assignment function (see, for example, Japanese Patent Application Publication No. 2005-011316 and Japanese Patent Application Publication No. 2006-302258). This dynamic capacity assignment function is achieved by means of a capacity pool which collects together the storage region of a storage device, and virtual volumes which do not have a physical storage capacity. Here, a "capacity pool" is a management unit which collects together one or more logical volume managed by a storage device, and which is handled as one large storage region. Furthermore, a "virtual volume" is a volume which does not have a physical storage capacity.

The dynamic capacity assignment function is a function which assigns a portion of the capacity of the capacity pool, as a storage region, to a write data storage location in the virtual volume, when a data write operation to a virtual volume arises. By executing this function, a storage capacity for storage is assigned only to the location of the volume where the data is stored, and assignment of storage capacity to other locations is not necessary. Therefore it is possible to achieve highly efficient storage of data.

The second technology is one which uses a storage grid. A "storage grid" is a technique which enables handing of data of an amount which clearly exceeds the amount of data that can be handled by one storage device, by employing and managing a plurality of dispersed storage modules as though they were one storage module.

However, if a dynamic capacity assignment function is applied to storage grid technology, in such a manner that the capacity pools and the virtual volumes which use the capacity pools managed by respective storage modules, are managed in an integrated fashion, then since the management of the capacity pool handled by the dynamic capacity assignment function is closed within the storage device, a problem arises in that even if the capacity of the free storage region of the capacity pool (free capacity) of a particular storage module is exhausted, it is difficult to accommodate with the free capacity of another storage module.

The present invention is devised in view of the aforementioned problems, an object thereof being to provide technology which enables the efficient management of the capacity of free storage regions of the capacity pools of storage modules.

In order to preferably achieve the aforementioned object, the storage module according to one aspect of the present invention is a storage module that manages a capacity pool comprising at least a portion of a storage data region of a plurality of data storage media; comprising: a capacity pool management table that manages a free storage data region of the storage region of the capacity pool; an adjustment judging unit that judges whether or not a capacity of the free storage region of the capacity pool matches conditions for carrying out capacity adjustment of the free storage region of the capacity pool; and a free capacity increasing unit that, if it is judged by the adjustment judging unit that the conditions are matched, increases the capacity of the free storage region in the capacity pool by using a storage data region of a data storage medium that is under the management of another storage module.

Other aspects of the present invention are set out in the following description and claims.

### BRIEF DESCRIPTION OF THE DRAWINGS

Fig. 1 is a diagram showing an example of the composition of a storage system according to a first embodiment of the present invention;
Fig. 2 is a diagram showing the internal structure of a memory 11112;
Fig. 3 is a diagram showing the internal structure of a memory 11212;
Fig. 4 is a diagram showing the structure of a RAID group management table 11112-11;
Fig. 5 is a diagram showing the structure of a volume management table 11112-12;
Fig. 6 is a diagram showing the structure of a virtual volume allocation region management table 11112-13;
Fig. 7 is a diagram showing the structure of a capacity pool structure management table 11112-14;
Fig. 8 is a diagram showing the structure of processing which constitutes a capacity pool operation program 11112-02;
Fig. 9 is a diagram showing the structure of processing which constitutes a volume operation program 11112-03;
Fig. 10 is a diagram showing the structure of processing which constitutes an I/O processing program 11112-04;
Fig. 11 is a flowchart showing a processing sequence executed by a command processing program 11112-00;
Fig. 12 is a flowchart showing a processing sequence executed by the command processing program 11112-00, as a continuation of Fig. 11;
Fig. 13 is a flowchart showing a processing sequence executed by a message reception processing program 11112-01;
Fig. 14 is a flowchart of a capacity pool creation control process 11112-02-01;
Fig. 15 is a flowchart of a capacity pool creation process 11112-02-02;
Fig. 16 is a flowchart of a capacity pool capacity addition process 11112-02-03;
Fig. 17 is a flowchart of a capacity pool state acquisition process 11112-02-06;
Fig. 18 is a flowchart showing the processing sequence of a capacity pool state collection control 11112-02-07;
Fig. 19 is a flowchart of a virtual volume creation process 11112-03-02;
Fig. 20 is a flowchart showing the processing sequence of virtual volume migration control 11112-03-03;
Fig. 21 is a flowchart of a virtual volume deletion process 11112-03-04;
Fig. 22 is a flowchart of a storage region assignment process 11112-03-05;
Fig. 23 is a flowchart of a storage region release process 11112-03-06;
Fig. 24 is a flowchart of a data replication process 11112-03-07;
Fig. 25 is a flowchart of an I/O suspending process 11112-04-01;
Fig. 26 is a flowchart of an I/O starting process 11112-04-02;
Fig. 27 is a flowchart of a write I/O process 11112-04-03;
Fig. 28 is a flowchart of a read I/O process 11112-04-04;
Fig. 29 is a flowchart showing a processing sequence executed by an HDD operation program 11112-05;
Fig. 30 is a diagram showing an output screen of a user interface 11014 of the storage management terminal 11010;
Fig. 31 is a diagram showing an example of the composition of a computer system according to a second embodiment of the present invention;
Fig. 32 is a diagram showing the structure of processing which constitutes a capacity pool operation program 11112-02;
Fig. 33 is a flowchart showing a processing sequence executed by a command processing program 11112-00;
Fig. 34 is a flowchart showing a processing sequence executed by a message reception processing program 11112-01;
Fig. 35 is a flowchart of capacity pool free region migration control 11112-02-04;
Fig. 36 is a flowchart of a capacity pool free region transmission process 11112-02-05; and
Fig. 37 is a flowchart of a storage region assignment process 11112-03-05.

Respective embodiments of the present invention are described below with reference to the drawings. The embodiments described below are not intended to limit the scope of the invention described in the claims, and it is not essential that the means of resolving the invention should combine all of the features described in the embodiments.

### (First embodiment)

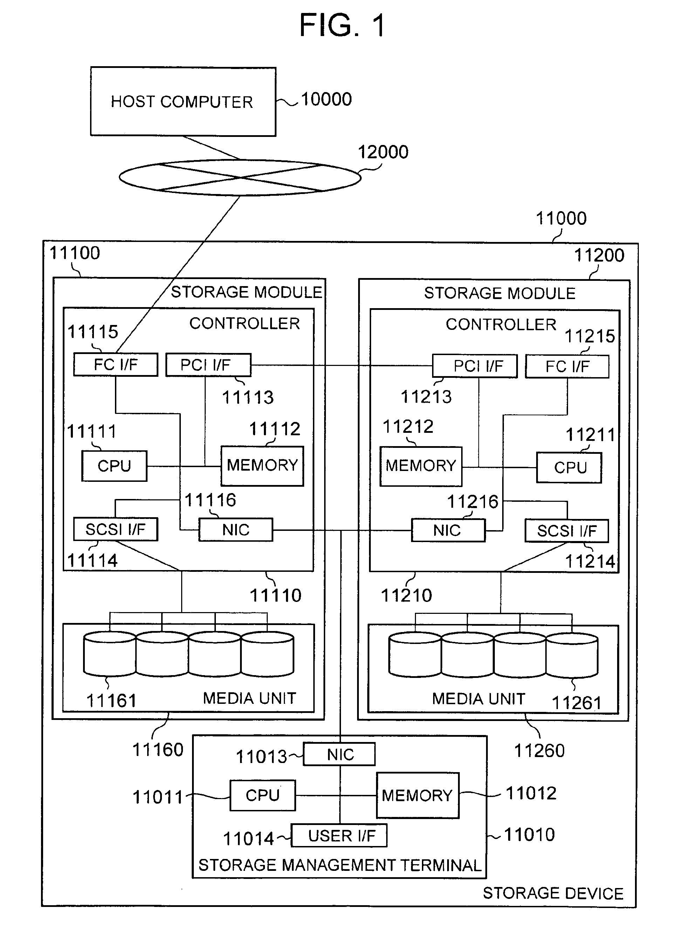

Fig. 1 is a diagram showing an example of the composition of a storage system according to a first embodiment of the present invention.

In this storage system, the storage device 11000 and the host computer 10000 are connected to a storage network 12000. The host computer 10000 sends a write request for writing data and a read request for reading out data, to the storage device 11000. The storage device 11000 comprises a storage module 11100 and a storage module 11200, which are examples of a storage module, and a storage management terminal 11010. The storage module 11100 and the storage module 11200 can be operated respectively and independently. In the present embodiment, the storage device 11000 comprises two storage modules, namely, a storage module 11100 and a storage module 11200, but the number of storage modules may be three or more.

The storage management terminal 11010 is a terminal for carrying out various management functions with respect to the storage module 11100 and the storage module 11200. The storage management terminal 11010 comprises a processor (CPU) 11011, a memory 11012, a management terminal connection interface (NIC) 11013, and a user interface (user I/F) 11014.

A processor 11011 controls the respective sections which constitute the storage management terminal 11010. The memory 11012 is a storage region for storing programs in order for the processor 11011 to carry out processing, and control tables. The management terminal connection interface 11013 is an interface for communicating with the storage device 11000, and it is connected to a management terminal connection interface (NIC) 11116 and a management terminal connection interface (NIC) 11216. The user interface 11014 is an information input and output interface between the storage user and the storage management terminal 11010, and it is connected to a display for outputting information, and to input devices such as a mouse, keyboard and the like, for inputting information.

The storage module 11100 comprises a storage unit 11160 for accommodating data storage media for storing data, and a controller 11110 which controls the whole storage module 11100. The storage module 11200 comprises a storage unit 11260 for accommodating data storage media, and a controller 11210 which controls the whole storage module 11200.

The storage unit 11160 comprises a plurality of hard disk drives (HDD) 11161, which are one example of data storage media. The storage unit 11260 comprises a plurality of hard disk drives 11261, which are one example of data storage media.

In the present embodiment, hard disk drives 11161 and hard disk drives 11261 are used as data storage media, but it is also possible to use another type of data storage medium, such as a flash memory, instead of at least one of the hard disk drives 11161 or the hard disk drives 11261. Furthermore, instead of at least one of the storage unit 11160 or the storage unit 11260, it is also possible to connect an external storage unit, in such a manner that the data storage media provided by the external storage unit can be used.

The controller 11110 of the storage module 11100 comprises: a processor (CPU) 11111, a memory 11112, a storage network interface (for example, FC I/F) 11115, a storage module connection interface (for example, PCI I/F) 11113, an HDD connection interface (for example, SCSI I/F) 11114, and a management terminal connection interface (for example, NIC) 11116.

The controller 11210 of the storage module 11200 comprises: a processor (CPU) 11211, a memory 11212, a storage network interface (for example, FC I/F) 11215, a storage module connection interface (for example, a PCI I/F) 11213, an HDD connection interface (for example, a SCSI I/C) 11214, and a management terminal connection interface (for example, a NIC) 11216.

The processor 11111 controls the respective sections which comprise the storage module 11100. A processor 11211 controls the respective sections which constitute the storage module 11200. Here, an adjustment judgment unit, a free capacity increasing unit, a storage region assignment unit, a table management unit, a reception unit, a virtual volume judgment unit, an access request transfer unit, an access control unit, a collecting unit, and an adding unit are principally constituted by means of the processor 11111 or the processor 11211 executing various types of programs.

The storage module connection interface 11113 and the storage module connection interface 11213 are interfaces for communicating data between the storage module 11100 and the storage module 11200. The storage module connection interface 11113 and the storage module connection interface 11213 are mutually connected by means of a cable. The communications path formed by the storage module connection interface 11113, the storage module connection interface 11213 and the cable has a broad communications band.

The storage network interface 11115 and the storage network interface 11215 are interfaces for connecting with the storage network 12000. In the present embodiment, only the storage network interface 11115 is connected to the storage network 12000, but the storage network interface 11215 may also be connected to the storage network 12000.

The HDD connection interface 11114 is an interface for connecting to the hard disk drives 11161. Furthermore, the HDD connection interface 11214 is an interface for connecting to the hard disk drives 11261.

The management terminal connection interface 11116 and the management terminal connection interface 11216 are interfaces for connecting to the storage management terminal 11010. In the present embodiment, the management terminal connection interface 11116 and the management terminal connection interface 11216 are connected together, but it is also possible for these interfaces not to be connected.

The memory 11112 is a memory device for caching the programs for the processor 11111 to carry out processing, as well as control tables, and data that has been read out from, or is to be written to, the hard disk drives 11161. The memory 11212 is a memory device region for caching the programs for the processor 11211 to carry out processing, as well as control tables, and data that has been read out from, or is to be written to, the hard disk drives 11261.

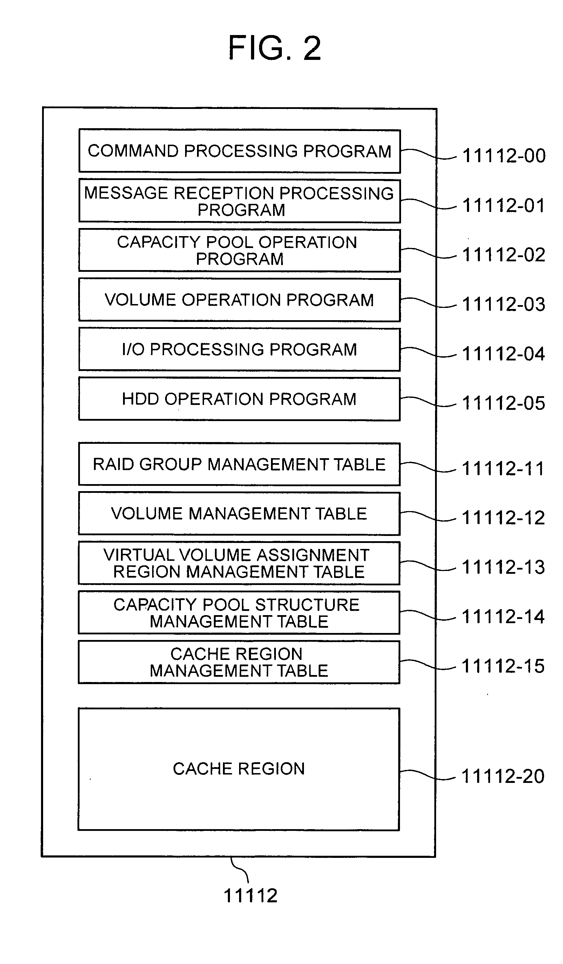

Fig. 2 is a diagram showing the internal structure of the memory 11112.

The memory 11112 stores programs, such as a command processing program 11112-00, a message reception processing program 11112-01, a capacity pool operation program 11112-02, a volume operation program 11112-03, an I/O processing program 11112-04, and a HDD operation program 11112-05. Furthermore, the memory 11112 stores tables, such as a RAID group management table 11112-11, a volume management table 11112-12, a virtual volume assignment region management table 11112-13, a capacity pool structure management table 11112-14 , which is one example of a capacity pool management table, and a cache region management 11112-15. The region of the memory 11112 apart from the region which stores the programs and tables described above is used as a cache region 11112-20.

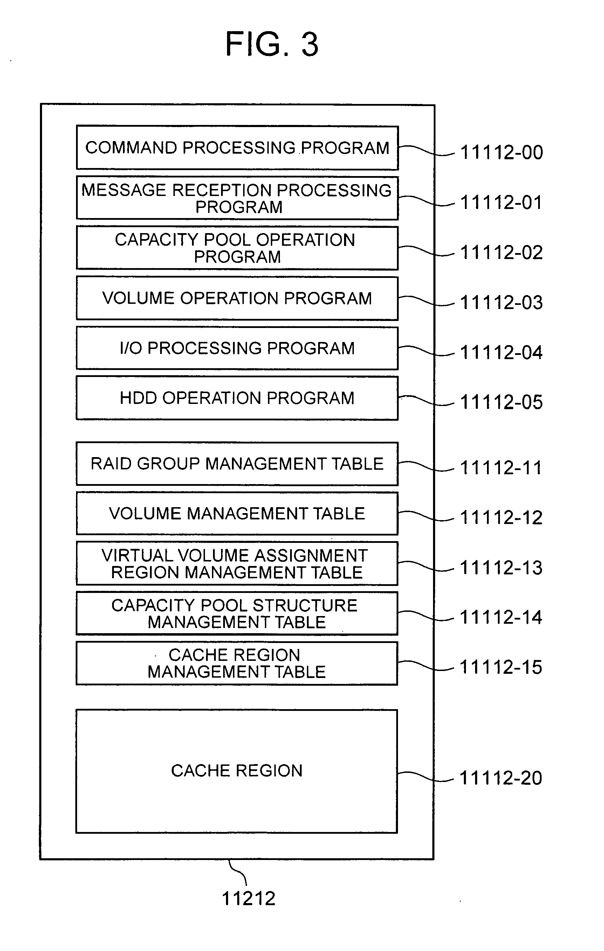

Fig. 3 is a diagram showing the internal structure of the memory 11212.

The memory 11212 stores programs, such as a command processing program 11112-00, a message reception processing program 11112-01, a capacity pool operation program 11112-02, a volume operation program 11112-03, an I/O processing program 11112-04, and a HDD operation program 11112-05. Furthermore, the memory 11212 stores tables, such as a RAID group management table 11112-11, a volume management table 11112-12, a virtual volume assignment region management table 11112-13, a capacity pool structure management table 11112-14, which is one example of a capacity pool management table, and a cache region management 11112-15. The region of the memory 11212 apart from the region which stores the programs and tables described above is used as a cache region 11112-20. Here, the programs inside the memory 11212 are programs which execute the same processing as the respective programs in the memory 11112, and the tables inside the memory 11212 have the same composition as the respective tables in the memory 11112. However, the parameters stored inside the tables are different in the memory 11212 and in the memory 11112.

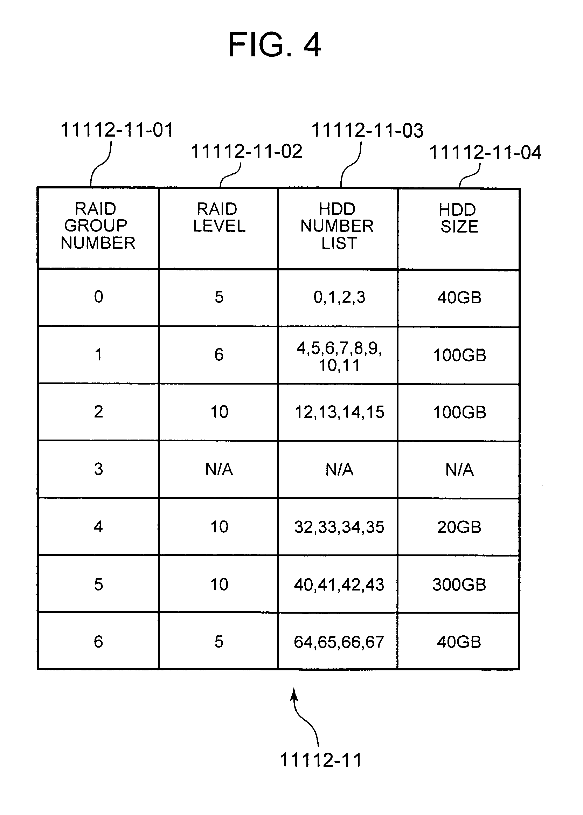

Fig. 4 is a structural diagram of a RAID group management table 11112-11.

The RAID group management table 11112-11 stores information relating to the HDDs which constitute RAID groups. The RAID group management table 11112-11 comprises, as members, a RAID group number 11112-11-01, a RAID level 11112-11-02, a HDD number list 11112-11-03, and a HDD size 11112-11-04.

The RAID group number 11112-11-01 stores identification information for uniquely identifying a group into which desired HDDs have been collected, for example, a group having a RAID structure (RAID group). As well as information relating to RAID groups, it is also possible to store, for example, identification information for groups having a JBOD (Just a Bunch Of Disks) structure or groups composed by a single HDD. The RAID level 11112-11-02 stores the RAID level in a case where a RAID structure is created. The RAID level is a number which represents the redundancy method in the RAID structure, and it takes any value from "0" to "6" which indicate levels 0 to 6, or a value of "10" which indicates a combination of level 1 and level 0. The HDD number list 11112-11-03 stores identifiers for identifying the hard disk drives 11161 or the hard disk drives 11261 belonging to the RAID group concerned. If the RAID group management table 11112-11 is stored in the memory 11112, then it is possible to store one or more identifier corresponding to any one of the hard disk drives 11161, only, in the storage module 11100, and if it is stored in the memory 11212, then it is possible to store one or more identifier corresponding to any one of the hard disk drives 11261, only, in the storage module 11200. The HDD size 11112-11-04 stores the total capacity of the RAID group in question. This total capacity does not include the capacity of the region which cannot be used due to redundancy, or the capacity of the various control tables stored in that RAID group.

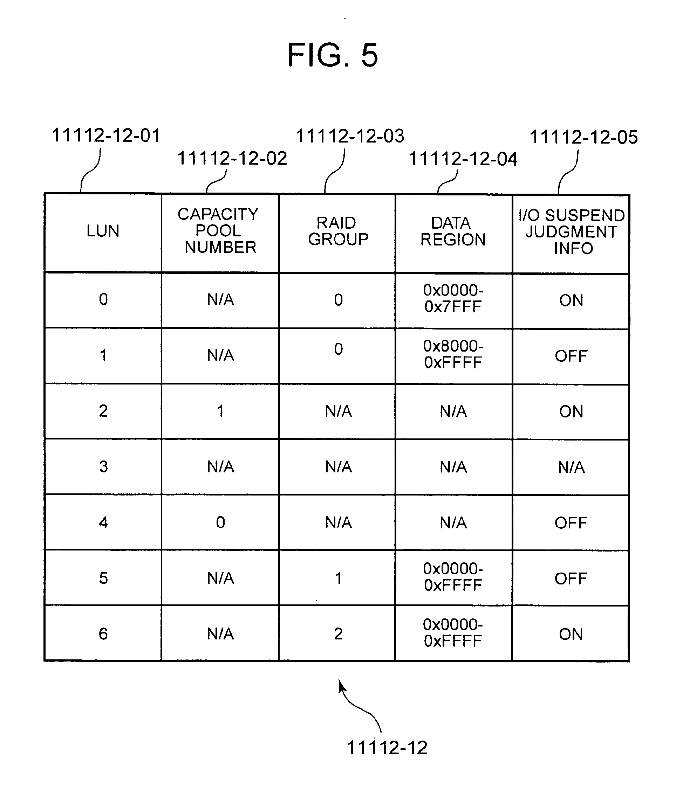

Fig. 5 is a structural diagram of a volume management table 11112-12.

The volume management table 11112-12 stores information relating to the volumes presented to the storage user. The volume management table 11112-12 comprises, as members, a volume number (LUN) 11112-12-01, a capacity pool number 11112-12-02, a RAID group number 11112-12-03, a data region 11112-12-04, and I/O suspend judgment information 11112-12-05.

The volume number 11112-12-01 stores a volume number that is presented to the storage user. The storage user is able to identify the volume where data is stored on the basis of this volume number. The capacity pool number 11112-12-02 stores an identifier of the capacity pool associated with the virtual volume, when the volume concerned is a virtual volume. If the volume concerned is not a virtual volume, in other words, if it is a logical volume, then information indicating a logical volume (for example, "N/A") is stored. The RAID group number 11112-12-03 stores an identifier of the RAID group which is associated with the data access target, if the volume concerned is a logical volume. If the volume concerned is not a logical volume, in other words, if it is a virtual volume, then information indicating a virtual volume (for example, "N/A") is stored. The data region 11112-12-04 stores the range used by the corresponding logical volume, in the RAID group associated by the RAID group number 11112-12-03, if the volume concerned is a logical volume. By this means, it is possible to divide one RAID group into a plurality of logical volumes which are presented to the user. If the volume concerned is not a logical volume, in other words, if it is a virtual volume, then information indicating a virtual volume (for example, "N/A") is stored in the data region 11112-12-04. The I/O suspend judgment information 11112-12-05 stores one of two values, "ON" or "OFF", as information indicating whether or not the I/O relating to the volume concerned has temporarily suspended. If the I/O suspend judgment information 11112-12-05 stores the value "OFF", then it is possible to carry out I/O immediately, when an I/O operation relating to the volume concerned arises, but if it stores the value "ON", then I/O operation is suspended until the value of the I/O suspend judgment information 11112-12-05 changes to "OFF".

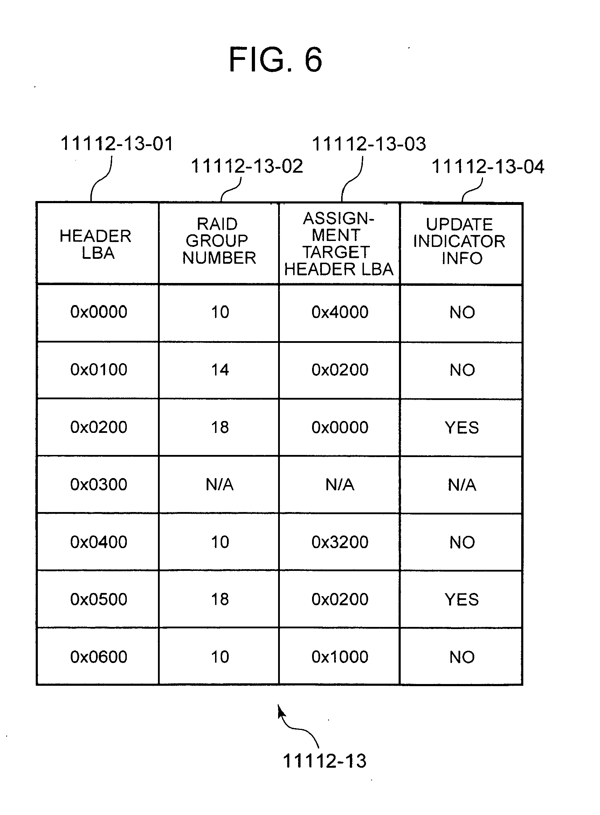

Fig. 6 is a structural diagram of a virtual volume assignment region management table 11112-13.

The virtual volume assignment region management table 11112-13 stores the relationships of the HDD storage regions assigned to a particular virtual volume. The virtual volume assignment region management table 11112-13 comprises, as members, a storage region assignment source number (header LBA) 11112-13-01, a storage region assignment target RAID group number 11112-13-02, a storage region assignment target number (assignment target header LBA) 11112-13-03, and update indicator information 11112-13-04.

The storage region assignment source number 11112-13-01 stores identification information which indicates a data position on the virtual volume. The storage region assignment target RAID group number 11112-13-02 stores information indicating the RAID group accommodating the storage region which has been assigned to the storage region indicated by the identification information stored in the storage region assignment source number 11112-13-01, of the virtual volume. If a storage region has not been assigned to the region in question, then information indicating non-assignment (for example, "N/A") is stored. The storage region assignment target number 11112-13-03 stores information which identifies the storage region that has been assigned to the region indicated by the storage region assignment target number 11112-13-01 of the virtual volume. If a storage region has not been assigned to the region in question, then information indicating non-assignment (for example, "N/A") is stored. The update indicator information 11112-13-04 stores information indicating the presence / absence of an update in relation to the storage region of the virtual volume.

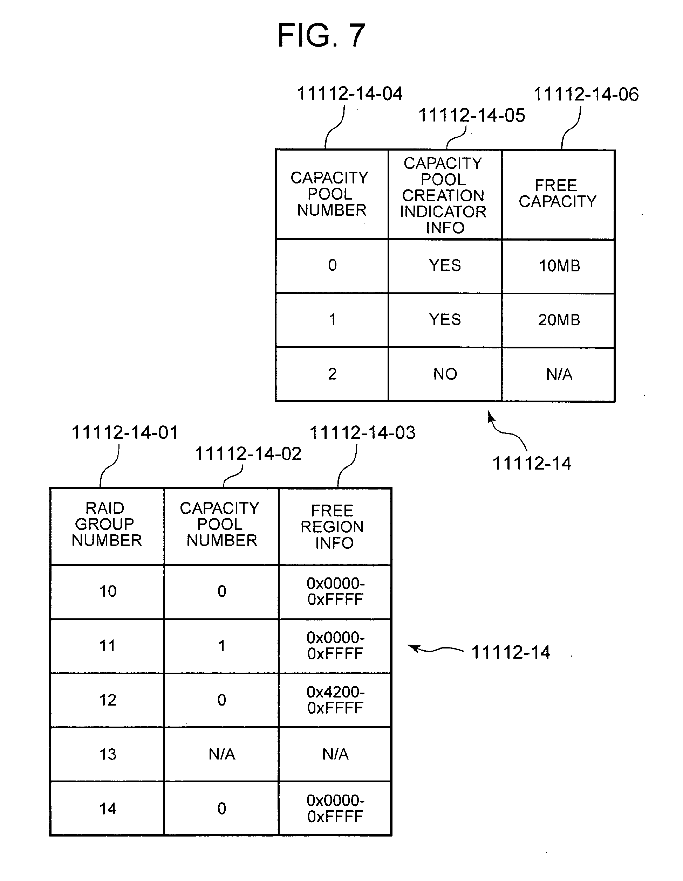

Fig. 7 is a structural diagram of a capacity pool structure management table 11112-14.

The capacity pool structure management table 11112-14 is a table for managing the free regions in the capacity pools used to manage the storage regions assigned to a virtual volume. The capacity pool structure management table 11112-14 comprises, as members, a RAID group number 11112-14-01, a capacity pool number 11112-14-02, free region information 11112-14-03, a capacity pool number 11112-14-04, capacity pool creation indicator information 11112-14-05, and a capacity pool free capacity 11112-14-06.

The RAID group number 11112-14-01 stores a number for identifying a RAID group belonging to a capacity pool. The capacity pool number 11112-14-02 stores information identifying the capacity pool to which the RAID group in question belongs, if there exist a plurality of capacity pools which can be managed by the storage device 11000. The free region information 11112-14-03 stores information for specifying the free region (unused region) in the storage region managed by the RAID group in question, in other words, the storage region that has not been assigned to a virtual volume. The capacity pool number 11112-14-04 stores a number for identifying the capacity pool. This value is the same as the value stored in the capacity pool number 11112-14-02. The capacity pool creation indicator information 11112-14-05 stores information indicating whether or not the capacity pool in question has been created; if this indicator information is "Yes", then this indicates that the capacity pool has been created, and if it is "No", then this indicates that the capacity pool has not yet been created. The capacity pool free capacity 11112-14-06 stores the capacity of the free region (free capacity) of the capacity pool in question, this capacity value being equal to the sum of the capacities of the free regions indicated by the free region information 11112-14-03 that are associated with that capacity pool.

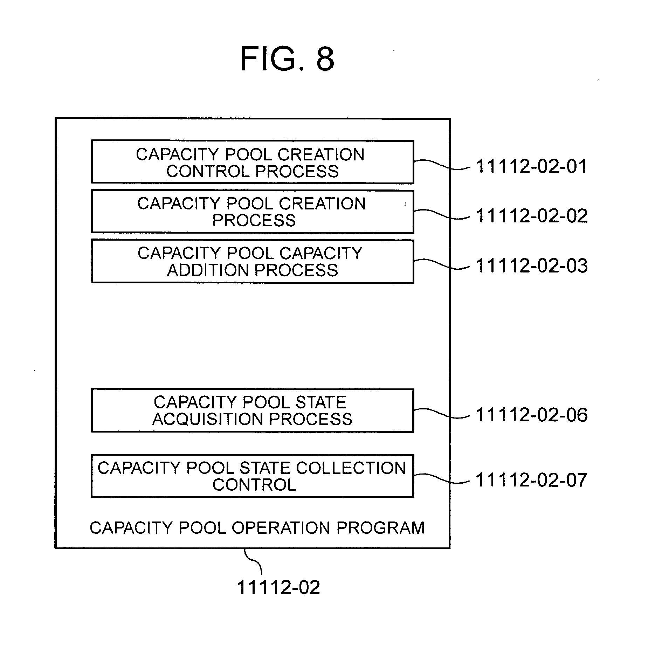

Fig. 8 is a schematic drawing of processing which constitutes the pool operation program 11112-02.

The pool operation program 11112-02 is a program for managing and controlling the capacity pool in the storage module 11100 or the storage module 11200. The pool operation program 11112-02 comprises: a capacity pool creation control process 11112-02-01, a capacity pool creation process 11112-02-02, a capacity pool capacity addition process 11112-02-03, a capacity pool state acquisition process 11112-02-06 and capacity pool state collection control 11112-02-07.

The capacity pool creation control process 11112-02-01 is a process which controls the creation of a capacity pool having the same ID in the storage module 11100 and the storage module 11200, by reporting a request for creation of a capacity pool having a desired ID, to the other storage module (for example, to the storage module 11200, if the capacity pool creation control process 11112-02-01 is being run by the storage module 11100), as well as reporting a request for creation of a capacity pool having the same ID, to the same storage module that is running the process. The capacity pool creation process 11112-02-02 is a process which registers information for a designated capacity pool, in the capacity pool structure management table 11112-14 of the same storage module. The capacity pool capacity addition process 11112-02-03 is a process which registers a designated RAID group as an member of a designated capacity pool, in the capacity pool structure management table 11112-14 of the same storage module. The capacity pool state acquisition process 11112-02-06 is a process which acquires information, such as the RAID groups constituting the capacity pool of the same storage module, and the free capacity of same, on the basis of the RAID group number 11112-14-01 and the capacity pool free capacity 11112-14-06. The capacity pool state collection control 11112-02-07 is a process which collects the results of the pool state acquisition processes 11112-02-06 executed by the respective storage modules, in all of the storage modules constituting the storage device 11000, and transfers same to the host computer 10000 or the storage management terminal 11010.

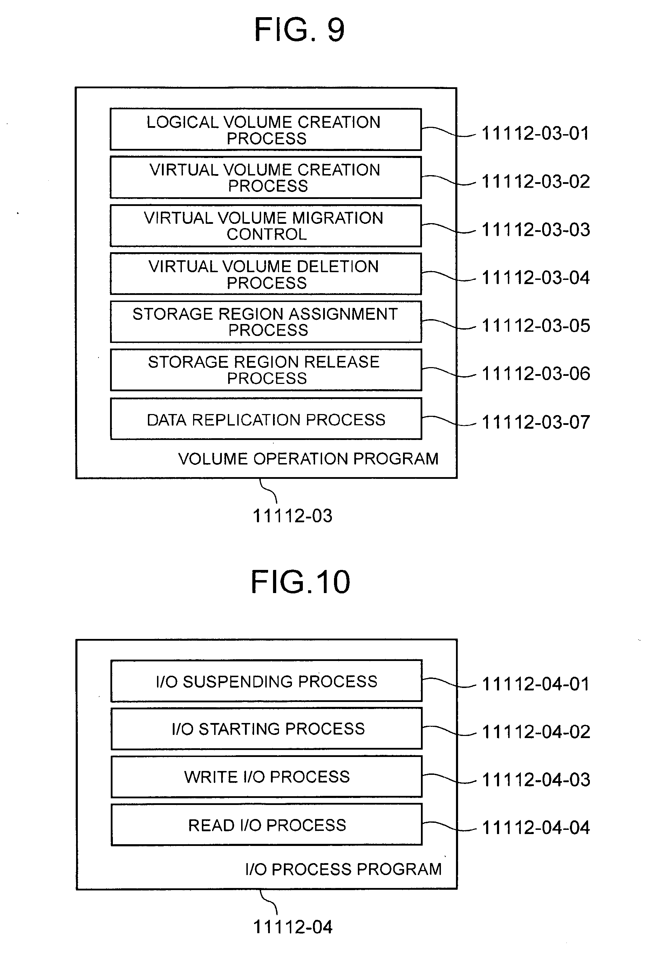

Fig. 9 is a schematic drawing of processing which constitutes the volume operation program 11112-03.

The volume operation program 11112-03 is a program for controlling processing in relation to the logical volumes or the virtual volumes presented by the storage device 11000 to the host computer 10000. The volume operation program 11112-03 comprises: a logical volume creation process 11112-03-01, a virtual volume creation process 11112-03-02, virtual volume migration control 11112-03-03, a virtual volume deletion process 11112-03-04, a storage region assignment process 11112-03-05, a storage region release process 11112-03-06, and a data replication process 11112-03-07.

The logical volume creation process 11112-03-01 is a process which stores information for a logical volume to be created, namely, the volume number, the number of the used RAID group, and the range assigned to the logical volume in the RAID group in question, respectively, in the volume number 11112-12-01, the RAID group number 11112-12-03, and the data region 11112-12-04, of the volume management table 11112-12 of the same storage module.

The virtual volume creation process 11112-03-02 is a process which stores information for a virtual volume to be created, namely, the volume number and the number of the capacity pool used, respectively, in the volume number 11112-12-01 and the capacity pool number 11112-12-02, of the volume management table 11112-12 of the same storage module. Desirably, the ratio between the capacity of the already created virtual volumes and the free capacity of the capacity pools is found, and the storage module having the smaller value of this ratio is selected as the storage module which executes this processing.

The virtual volume migration control 11112-03-03 is a process which controls the migration of management relating to a designated volume, from the same storage module, to the other storage module. The virtual volume deletion process 11112-03-04 is a process which deletes the information relating to a virtual volume that is to be deleted, namely, the volume number 11112-12-01 and the pool number 11112-12-02, from the volume management table 11112-12 of the same storage module. The storage region assignment process 11112-03-05 is a process which, in order to assign a reserved free region of a capacity pool to a desired region of a virtual volume, stores the address in the virtual volume receiving the assignment, the RAID group number of the assigned storage region, and the address on the RAID group of the assigned storage region, respectively, in the storage region assignment source number 11112-13-01, the storage region assignment target RAID group number 11112-13-02, and the storage region assignment target number 11112-13-03, of the virtual volume assignment region management table 11112-13.

The storage region release process 11112-03-06 is a process which, in order to release a storage region that has been assigned by the storage region assignment process 11112-03-05, erases information from the storage region assignment source number 11112-13-01, the storage region assignment target RAID group number 11112-13-02, and the storage region assignment target number 11112-13-03 of the virtual volume assignment region management table 11112-13.

Fig. 10 is a schematic drawing of processing which constitutes the I/O processing program 11112-04.

The I/O processing program 11112-04 is a program which carries out an I/O process received from a host computer 10000 with respect to a desired volume, and implements control relating to the I/O process. The I/O processing program 11112-04 comprises an I/O suspending process 11112-04-01, an I/O starting process 11112-04-02, a write I/O process 11112-04-03, and a read I/O process 11112-04-04.

The I/O suspending process 11112-04-01 is a process which, in order to suspend an I/O relating to the volume concerned, updates the I/O suspend judgment information 11112-12-05 of the volume management table 11112-12, to "ON". The I/O starting process 11112-04-02 is a process which, in order to start an I/O relating to the volume concerned, updates the I/O suspend judgment information 11112-12-05 of the volume management table 11112-12, to "OFF". The write I/O process 11112-04-03 is a process which transfers data from the host computer 10000 to the cache region 11112-20, in accordance with a write request issued by the host computer 10000. The read I/O process 11112-04-04 is a process which transfers data from the cache region 11112-20 to the host computer 10000, in accordance with a read request issued by the host computer 10000.

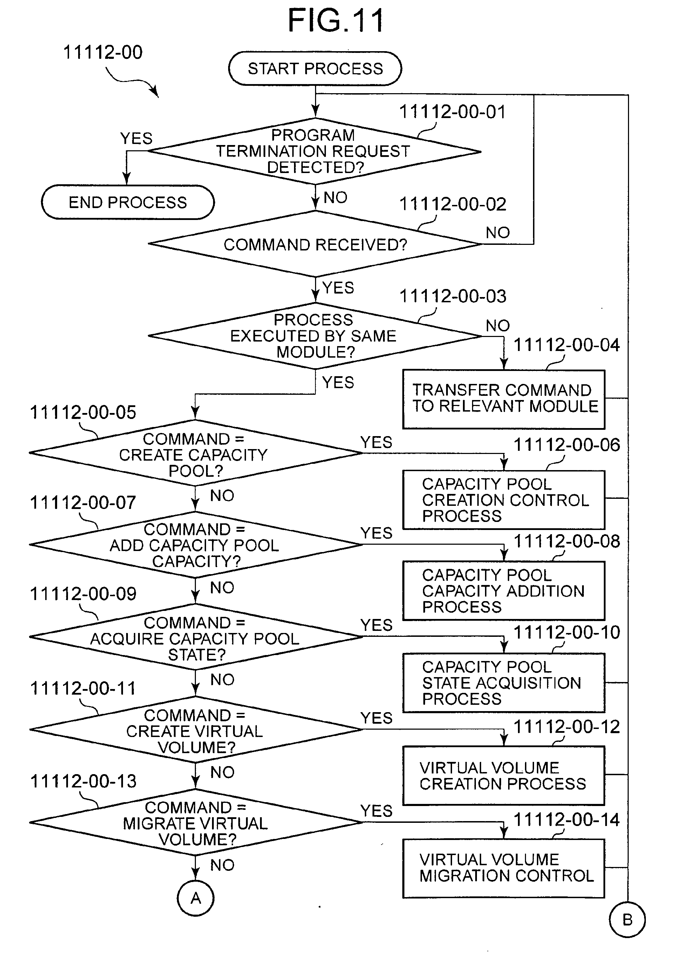

Fig. 11 is a flowchart showing the processing sequence of the command processing program 11112-00. The command processing program 11112-00 carries out processing in relation to various operating request commands issued by the host computer 10000, the other storage module, or the same storage module. Here, the processing of the command processing program 11112-00 stored in the memory 11112 of the storage module 11100 will be described. The processing of the command processing program 11112-00 stored in the memory 11212 of the storage module 11200 is similar.

The command processing program 11112-00 starts to be executed by the processor 11111 each time a prescribed period has elapsed, for example. Firstly, in the storage module 11100, when the processor 11111 starts execution of the command on processing program 11112-00, the processor 11111 advances to step 11112-00-01.

At step 11112-00-01, the processor 11111 detects whether or not there is a program termination request associated with a power switch off, or the like. If there has been a termination request, then the processing ends. On the other hand, if there is no termination request, then the processor 11111 advances to step 11112-00-02.

At step 11112-00-02, the processor 11111 investigates whether or not there is a notification (reception) of a command for a processing request. If there is no such notification, then the processor 11111 returns to step 11112-00-01. If there is such a notification, then the processor 11111 advances to step 11112-00-03.

At step 11112-00-03, the processor 11111 judges whether or not the command processing should be executed by the same storage module, or by the other storage module. In this judgment processing, if the same storage module is the storage module that is the object of the command processing, or if the command is one which specifies a volume, then it is judged whether or not the object volume or RAID group is managed by the same storage module 11100. If it is judged that the process is to be executed by the other storage module, then the processor 11111 advances to step 11112-00-04, whereas if it is judged that the processing is to be carried out by the same storage module 11100, then the processor 11111 advances to step 11112-00-05.

At step 11112-00-04, the processor 11111 transfers the command in question, to the storage module that should execute that command. The transfer data is transferred to the other storage module by being transmitted along the cable which links the storage module connection interface 11113 with the storage module connection interface 11213. After completing this transfer processing, the processor 11111 returns to step 11112-00-01.

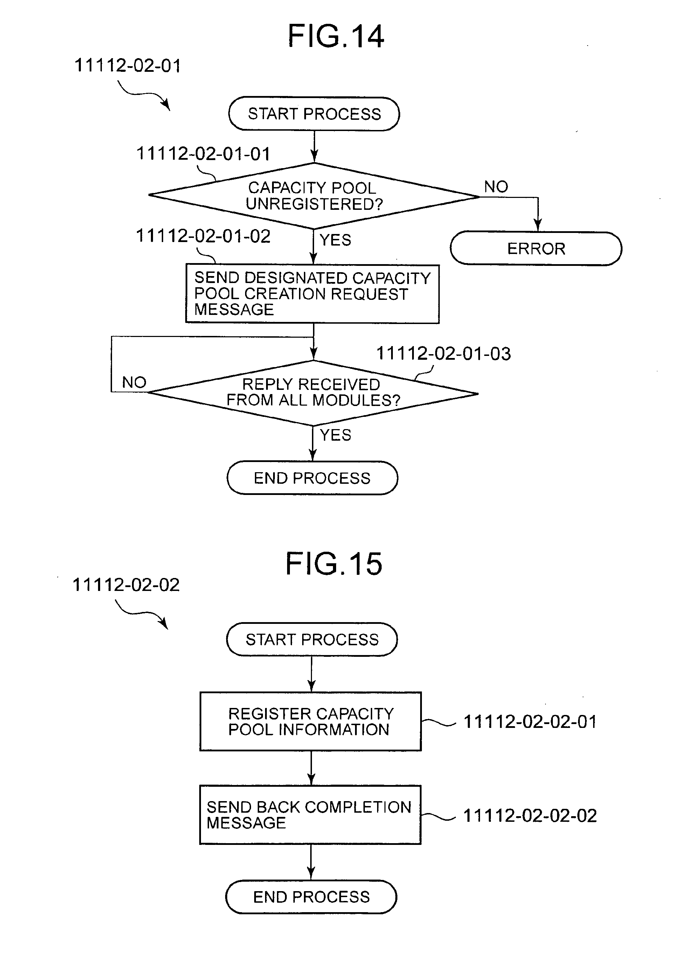

At step 11112-00-05, the processor 11111 judges whether or not the requested command is "create capacity pool". If the command is "create capacity pool", then the processor 11111 advances to step 11112-00-06, and if it is another command, then the processor 11111 advances to step 11112-00-07. At step 11112-00-06, the processor 11111 executes the capacity pool creation control process 11112-02-01 shown in Fig. 8 and Fig. 14. After completing the capacity pool creation control process 11112-02-01, the processor 11111 returns to step 11112-00-01.

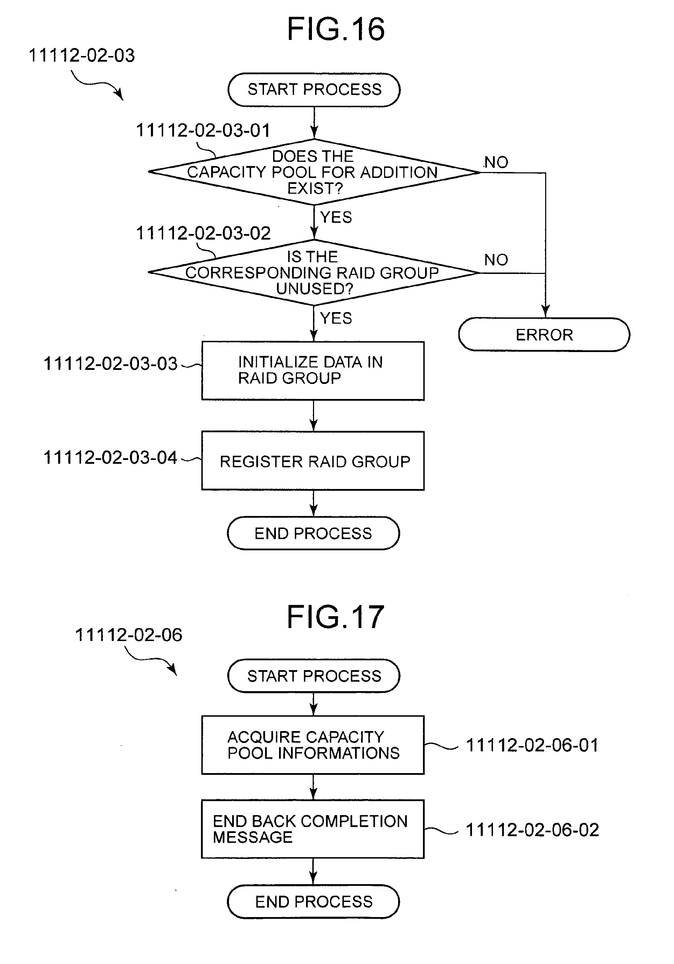

At step 11112-00-07, the processor 11111 judges whether or not the requested command is "add capacity to capacity pool". If the command is "add capacity to capacity pool", then the processor 11111 advances to step 11112-00-08, and if it is another command, then the processor 11111 advances to step 11112-00-09. At step 11112-00-08, the processor 11111 executes the capacity pool capacity addition process 11112-02-03 shown in Fig. 8 and Fig. 16. After completing the capacity pool capacity addition process 11112-02-03, the processor 11111 returns to step 11112-00-01.

At step 11112-00-09, the processor 11111 judges whether or not the requested command is "acquire state of capacity pool". If the command is "acquire capacity of capacity pool", then the processor 11111 advances to step 11112-00-10, and if it is another command, then the processor 11111 advances to step 11112-00-11. At step 11112-00-10, the capacity pool state acquisition process 11112-02-06 shown in Fig. 8 and Fig. 17 is executed. After completing the capacity pool state acquisition process 11112-02-06, the processor 11111 returns to step 11112-00-01.

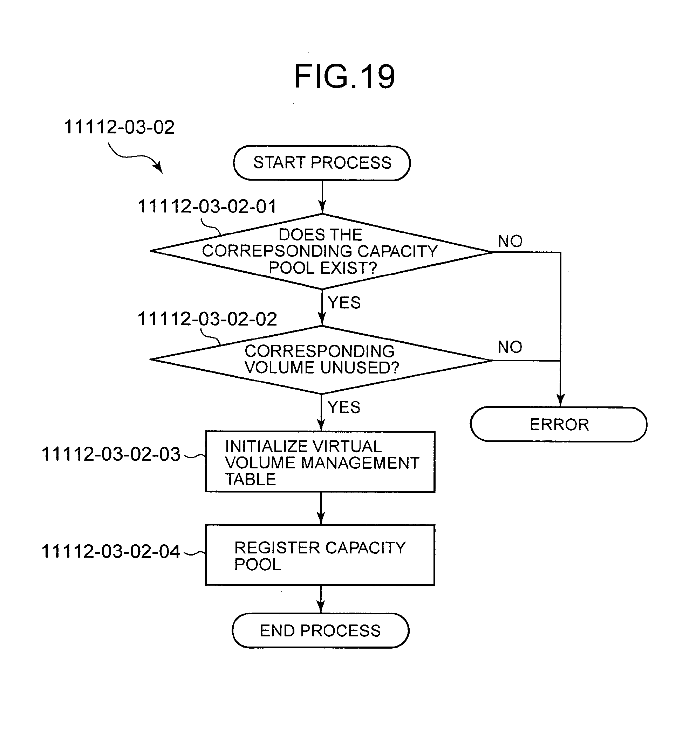

At step 11112-00-11, the processor 11111 judges whether or not the requested command is "create virtual volume". If the command is "create virtual volume", then the processor 11111 advances to step 11112-00-12, and if it is another command, then the processor 11111 advances to step 11112-00-13. At step 11112-00-12, the virtual volume creation process 11112-03-02 shown in Fig. 9 and Fig. 19 is executed. After completing the virtual volume creation process 11112-03-02, the processor 11111 returns to step 11112-00-01.

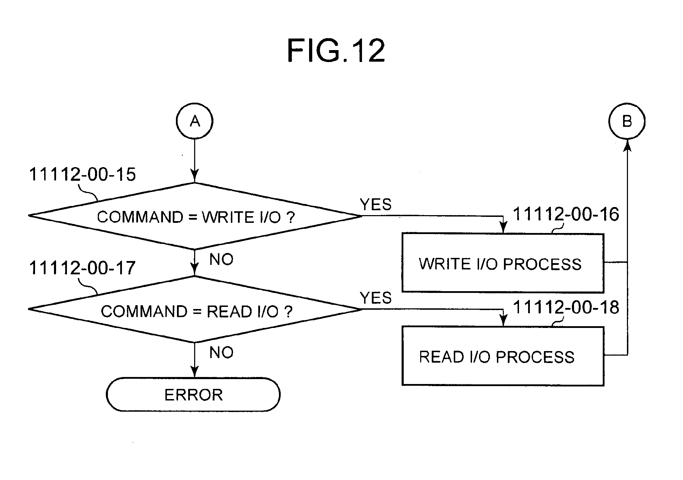

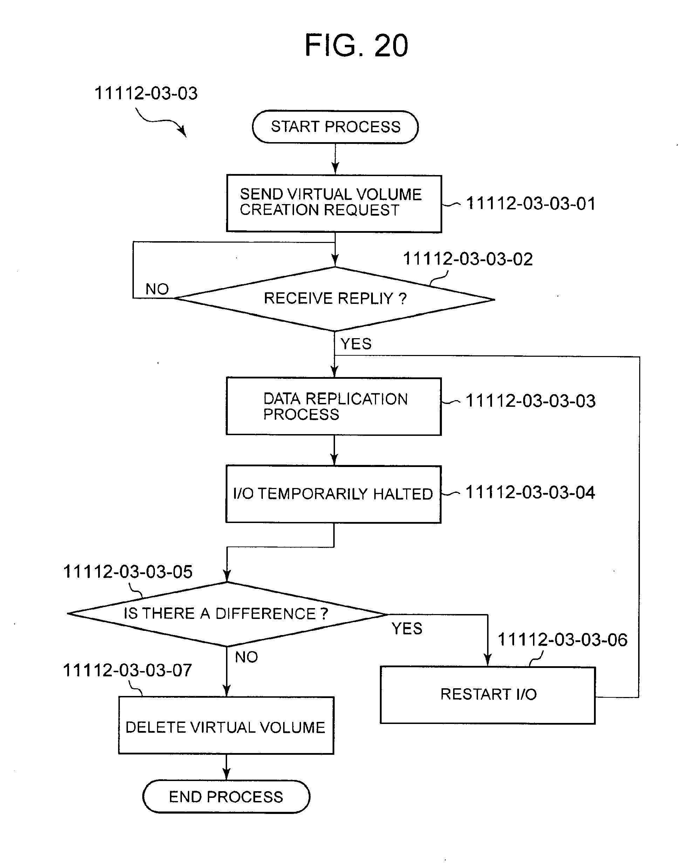

At step 11112-00-13, the processor 11111 judges whether or not the requested command is "migrate virtual volume". If the command is "migrate virtual volume", then the processor 11111 advances to step 11112-00-14, and if it is another command, then the processor 11111 advances to step 11112-00-15 in Fig. 12. At step 11112-00-14, the virtual volume migration control 11112-03-03 shown in Fig. 9 and Fig. 20 is executed. After completing the virtual volume migration process 11112-03-03, the processor 11111 returns to step 11112-00-01.

Fig. 12 is a flowchart showing the processing sequence of the command processing program 11112-00, as a continuation of Fig. 11.

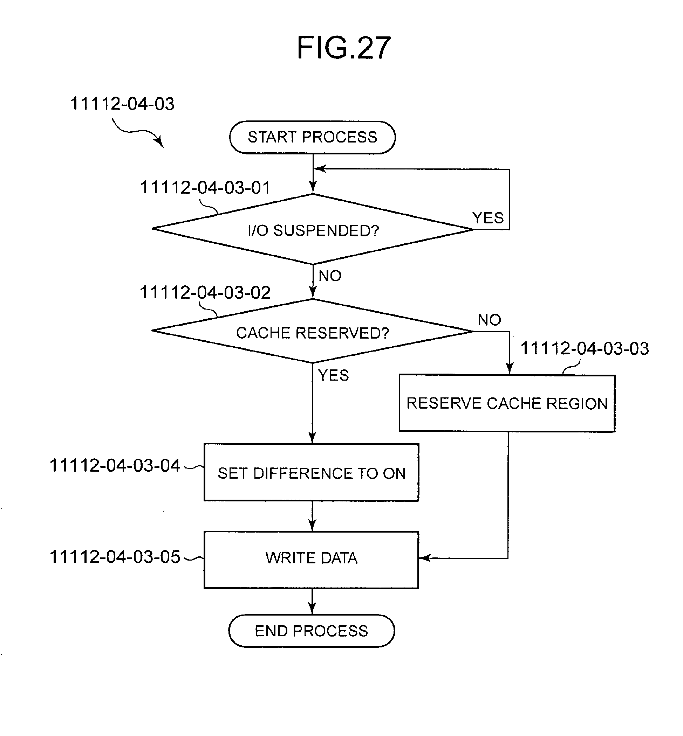

At step 11112-00-15, the processor 11111 judges whether or not the requested command is "write I/O". If the command is "write I/O", then the processor 11111 advances to step 11112-00-16, and if it is another command, then the processor 11111 advances to step 11112-00-17. At step 11112-00-16, the write I/O process 11112-04-03 shown in Fig. 10 and Fig. 27 is executed. After completing the I/O process 11112-04-03, the processor 11111 returns to step 11112-00-01 in Fig. 11.

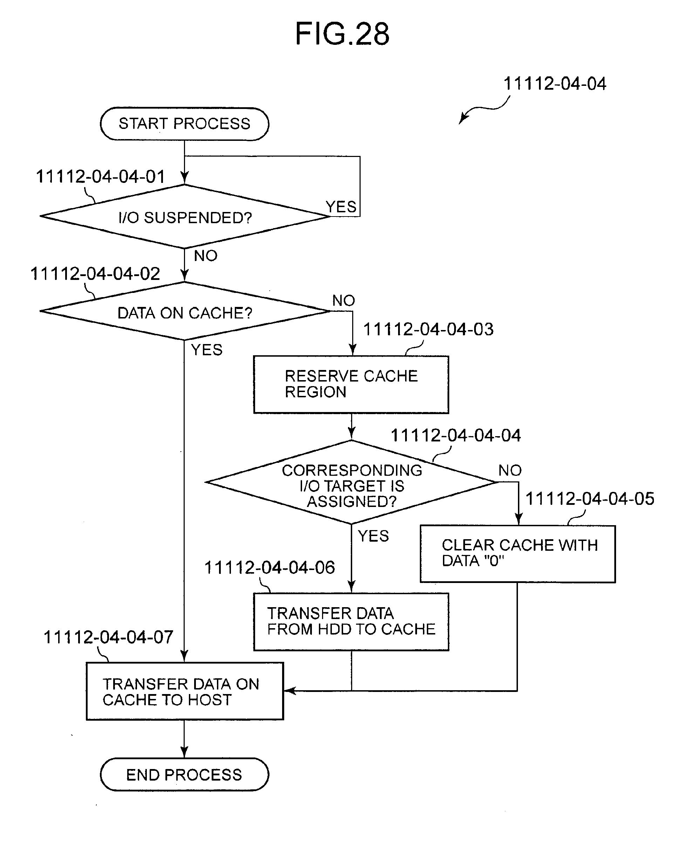

At step 11112-00-17, the processor 11111 judges whether or not the requested command is "read I/O". If the command is "read I/O", then the processor 11111 advances to step 11112-00-18, and if it is another command, then an error is issued. At step 11112-00-18, the processor 11111 executes the read I/O process 11112-04-04 shown in Fig. 10 and Fig. 28. After completing the read I/O process 11112-04-04, the processor 11111 returns to step 11112-00-01 in Fig. 11.

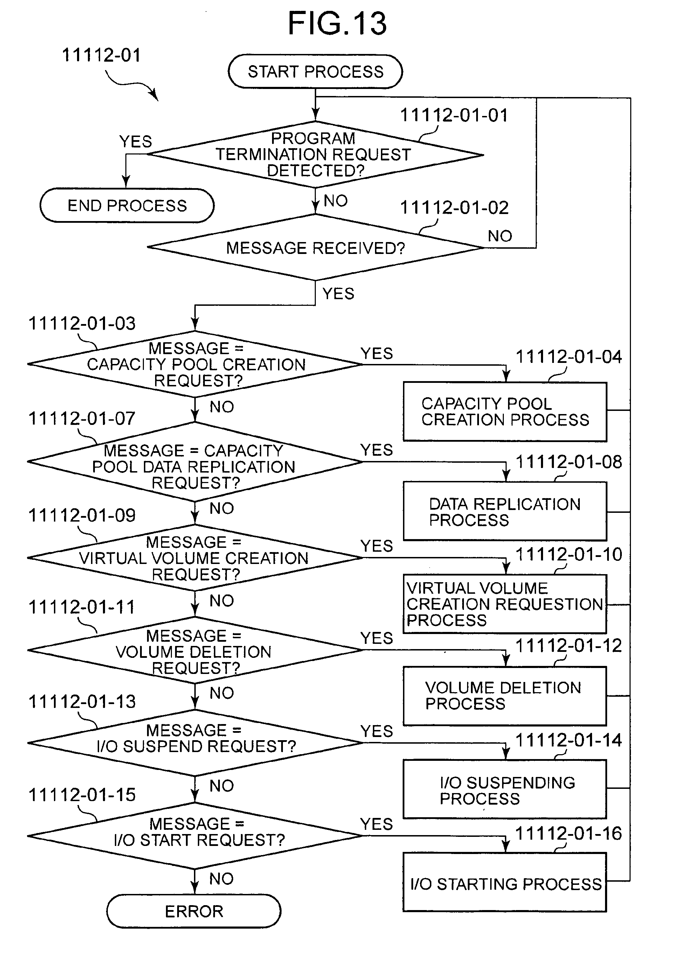

Fig. 13 is a flowchart showing the processing sequence of the message reception processing program 11112-01. The message reception processing program 11112-01 processes messages that have been issued, in order to execute processing in a coordinated fashion between a plurality of modules.

The message reception processing program 11112-01 starts to be executed by the processor 11111 each time a prescribed period has elapsed, for example. Firstly, in the storage module 11100, when the processor 11111 has started execution of the message reception processing program 11112-01, the processor 11111 then advances to step 11112-01-01. At step 11112-01-01, the processor 11111 judges whether or not there is a program termination request associated with a power switch off, or the like. If there has been a termination request, then the processor 11111 ends the process. If there is no termination request, then the processor 11111 advances to step 11112-01-02.

At step 11112-01-02, the processor 11111 investigates whether or not a message has been received. If no message has been received, then the processor 11111 returns to step 11112-01-01. If a message has been received, then the processor 11111 advances to step 11112-01-03.

At step 11112-01-03, the processor 11111 judges whether or not the received message is a "capacity pool creation request". If the message is a "capacity pool creation request", then the processor 11111 advances to step 11112-01-04, and if it is another message, then the processor 11111 advances to step 11112-01-07. At step 11112-01-04, the processor 11111 executes the capacity pool creation process 11112-02-02 shown in Fig. 8 and Fig. 15. After completing the capacity pool creation process 11112-02-02, the processor 11111 returns to step 11112-01-01.

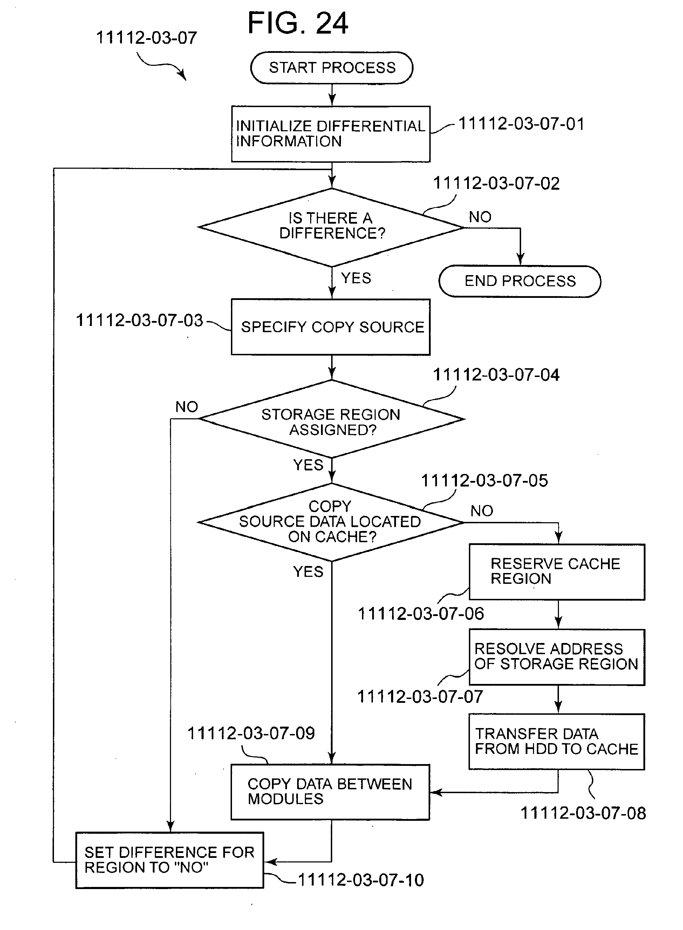

At step 11112-01-07, the processor 11111 judges whether or not the received message is a "capacity pool data replication request". If the message is a "capacity pool data replication request", then the processor 11111 advances to step 11112-01-08, and if it is another message, then the processor 11111 advances to step 11112-01-09. At step 11112-01-08, the processor 11111 executes the data replication process 11112-03-07 shown in Fig. 9 and Fig. 24. After completing the data replication process 11112-03-07, the processor 11111 returns to step 11112-01-01.

At step 11112-01-09, the processor 11111 judges whether or not the received message is a "virtual volume creation request". If the message is a "virtual volume creation request", then the processor 11111 advances to step 11112-01-10, and if it is another message, then the processor 11111 advances to step 11112-01-11. At step 11112-01-10, the processor 11111 executes a virtual volume creation request process. The virtual volume creation request process is a process whereby a step of issuing a reply indicating the termination of processing, to the source of the message, is executed additionally at the end of the virtual volume creation process 11112-03-02 shown in Fig. 9 and Fig. 19. After completing the virtual volume creation request process, the processor 11111 returns to step 11112-01-01.

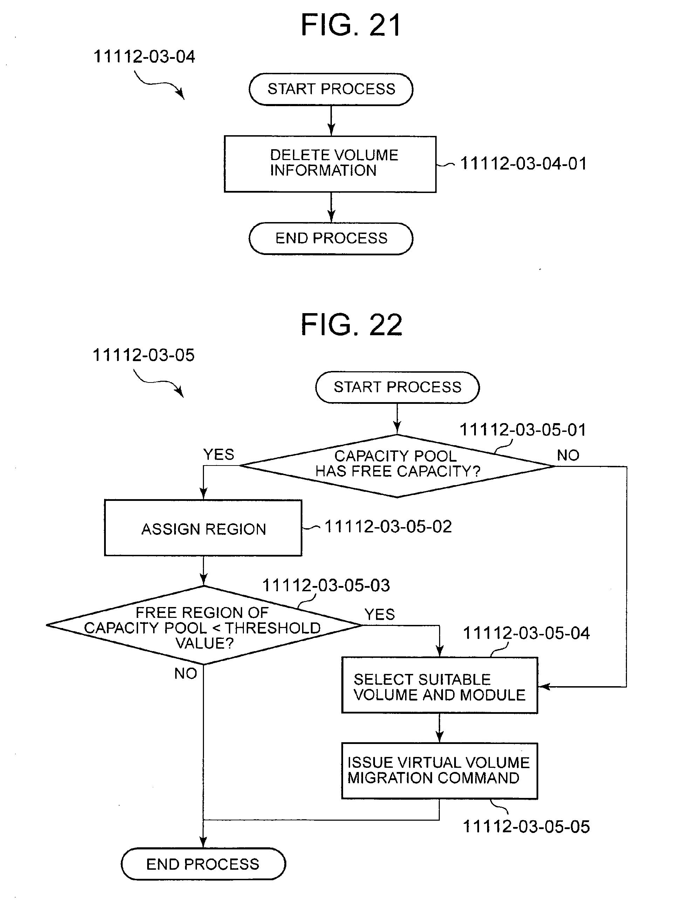

At step 11112-01-11, the processor 11111 judges whether or not the received message is a "volume deletion request". If the message is a "volume deletion request", then the processor 11111 advances to step 11112-01-12, and if it is another message, then the processor 11111 advances to step 11112-01-13. At step 11112-01-12, the processor 11111 executes the volume deletion process 11112-03-04 shown in Fig. 9 and Fig. 21. After completing the volume deletion process 11112-03-04, the processor 11111 returns to step 11112-01-01.

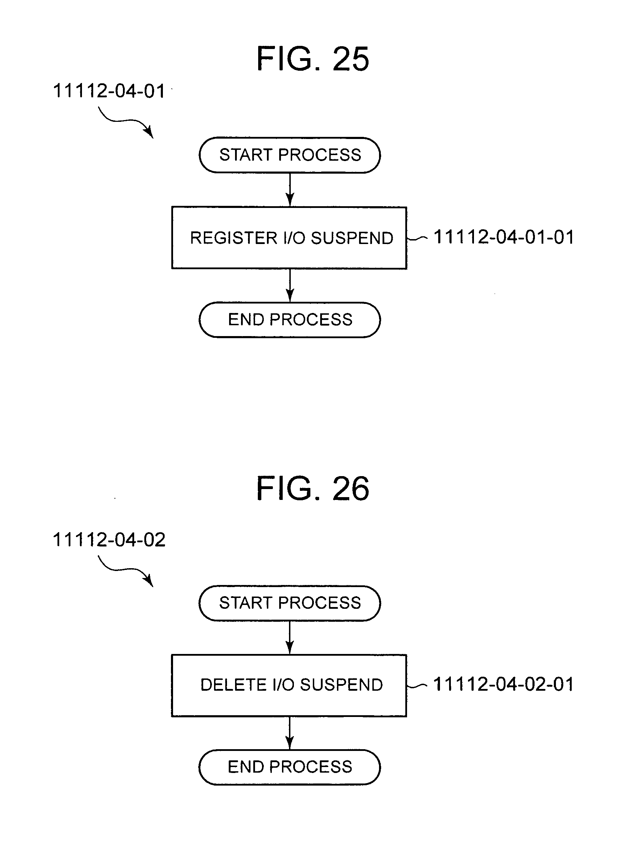

At step 11112-01-13, the processor 11111 judges whether or not the received message is an "I/O suspend request". If the message is an "I/O suspend request", then the processor 11111 advances to step 11112-01-14, and if it is another message, then the processor 11111 advances to step 11112-01-15. At step 11112-01-14, the processor 11111 executes the I/O suspending process 11112-04-01 shown in Fig. 10 and Fig. 25. After completing the I/O suspending process 11112-04-01, the processor 11111 returns to step 11112-01-01.

At step 11112-01-15, the processor 11111 judges whether or not the received message is an "I/O start request". If the message is an "I/O start request", then the processor 11111 advances to step 11112-01-16, and if it is another message, then an error is issued. At step 11112-01-16, the processor 11111 executes the I/O starting process 11112-04-02 shown in Fig. 10 and Fig. 26. After completing the I/O starting process 11112-04-02, the processor 11111 returns to step 11112-01-01.

Fig. 14 is a flowchart of the capacity pool creation control process 11112-02-01.

Firstly, in the storage module 11100, when the processor 11111 has started execution of the pool creation control process 11112-02-01, the processor 11111 then advances to step 11112-02-01-01. At step 11112-02-01-01, the processor 11111 checks whether the capacity pool to be created has already been created, by searching for the presence of a registration for the capacity pool to be created, in the capacity pool structure management table 11112-14. If it is found as a result of this check that the capacity pool has already been created, then an error is issued. If, on the other hand, it has not yet been created, then the processor 11111 advances to step 11112-02-01-02.

At step 11112-02-01-02, the processor 11111 sends a "capacity pool creation request" message to all of the storage modules in the storage device 11000. After sending this message, the processor 11111 advances to step 11112-02-01-03.

At step 11112-02-01-03, the processor 11111 waits for a reply message of "capacity pool creation completed", from all of the modules. When it has detected a reply from all of the modules, the processor 11111 then terminates the capacity pool creation control process 11112-02-01.

Fig. 15 is a flowchart of the capacity pool creation process 11112-02-02.

Firstly, in the storage module 11100, when the processor 11111 has started execution of the capacity pool creation process 11112-02-02, the processor 11111 then advances to step 11112-02-02-01. At step 11112-02-02-01, the processor 11111 detects the record corresponding to the capacity pool number designated by the capacity pool number 11112-14-04, in the capacity pool structure management table 11112-14, and it registers "Yes" in the capacity pool creation indicator information 1112-14-05 of that record, and registers "0", indicating that there is zero free capacity, in the capacity pool free capacity 11112-14-06 of that record. The processor 11111 then advances to step 11112-02-02-02.

At step 11112-02-02-02, the processor 11111 replies with a "capacity pool creation completed" message, to the module that was the source of the message, and then terminates the capacity pool creation process 11112-02-02.

Fig. 16 is a flowchart of the capacity pool capacity addition process 11112-02-03.

Firstly, in the storage module 11100, when the processor 11111 has started execution of the capacity pool capacity addition process 11112-02-03, the processor 11111 then advances to step 11112-02-03-01.

At step 11112-02-03-01, the processor 11111 detects the record in which the capacity pool number 1112-14-04 stores the capacity pool number corresponding to the capacity pool concerned from the capacity pool structure management table 11112-14, and confirms whether that capacity pool exists, by investigating whether the value "Yes" is stored in the capacity pool creation indicator information 1112-14-05 of the corresponding record. If it is found as a result of this confirmation that the capacity pool in question does exist, then the processor 11111 advances to step 11112-02-03-02, whereas if it does not exist, then an error is issued.

At step 11112-02-03-02, the processor 11111 detects the record in which the RAID group number 11112-14-01 stores the RAID group number corresponding to the RAID group concerned, from the capacity pool structure management table 11112-14, and confirms that that RAID group is unused, by checking that a capacity pool number is not stored in the capacity pool number 11112-14-02 of the corresponding record. If it is found that as a result of this confirmation that the RAID group in question is unused, then the processor 11111 advances to step 11112-02-03-03, whereas if it is in use, then an error is issued.

At step 11112-02-03-03, the processor 11111 initializes the HDDs 11161 which constitutes the RAID group that is being added to the capacity pool. By this means, when data is read out from the object RAID object, it is possible to acquire data of "0". Thereupon, the processor 11111 advances to step 11112-02-03-04.

At step 11112-02-03-04, the processor 11111 carries out registration processing in the capacity pool structure management table 11112-14. More specifically, firstly, the processor 11111 stores the value "Yes" in the capacity pool creation indicator information 1112-14-05 of the record corresponding to the capacity pool in question. Thereupon, the processor 11111 registers the identifier of the capacity pool that is the object of capacity addition, as the capacity pool number 11112-14-02 of the record corresponding to the initialized RAID group. Thereupon, the processor 11111 registers the whole region of that RAID group as the free region information 11112-14-03 of the corresponding record. Next, the processor 11111 adds the capacity of the RAID group to the capacity pool free capacity 11112-14-06 of the corresponding capacity pool. Subsequently, the processor 11111 terminates the capacity pool capacity addition process 11112-02-03.

Fig. 17 is a flowchart of the capacity pool state acquisition process 11112-02-06.

Firstly, in the storage module 11100, when the processor 11111 has started execution of the capacity pool state acquisition process 11112-02-06, the processor 11111 then advances to step 11112-02-06-01. At step 11112-02-06-01, the processor 11111 acquires the free capacity in the capacity pool in question, from the capacity pool free capacity 11112-14-06 in the capacity pool structure management table 11112-14, and it then proceeds to step 11112-02-06-02.

At step 11112-02-06-02, the processor 11111 sends a reply message, together with information on the free capacity acquired at step 11112-02-06-01, to the storage module which requested execution of the pool state acquisition process 11112-02-06. Subsequently, the processor 11111 terminates the capacity pool state acquisition process 11112-02-06.

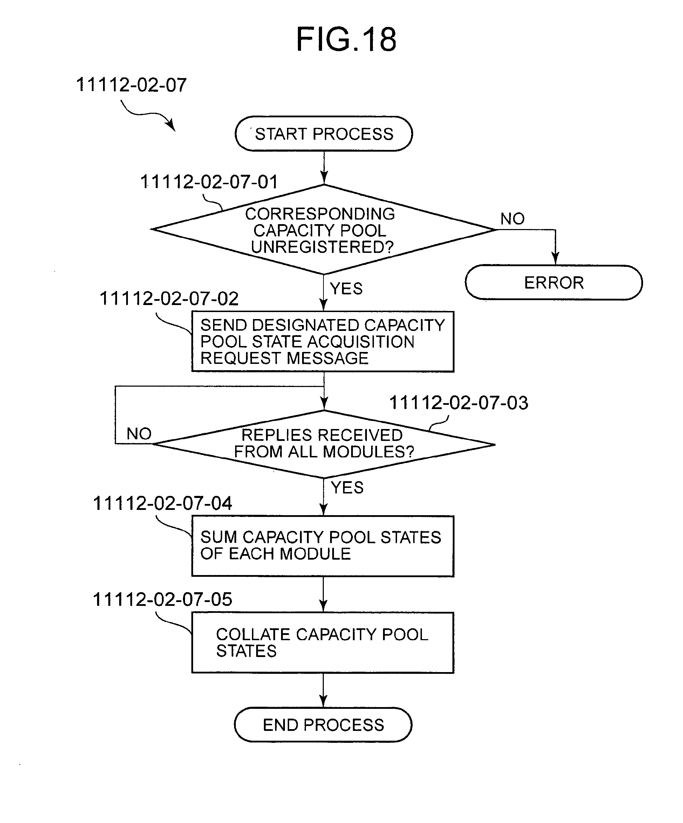

Fig. 18 is a flowchart of capacity pool state collection control 11112-02-07.

Firstly, in the storage module 11100, when the processor 11111 has started execution of the capacity pool state collection control 11112-02-07, the processor 11111 then advances to step 11112-02-07-01. At step 11112-02-07-01, the processor 11111 confirms that the value "Yes" is stored as the capacity pool creation indicator information 1112-14-05 of the record corresponding to the capacity pool in question, in the capacity pool structure management table 11112-14. If the value "Yes" is stored, then the processor 11111 recognizes that the capacity pool in question has already been created, and it advances to step 11112-02-07-02, whereas if the value "No" is stored, then the processor 11111 recognizes that the capacity pool in question has not yet been created, and it carries out error processing.

At step 11112-02-07-02, the processor 11111 sends a "capacity pool state acquisition request" message to all of the storage modules, and then advances to step 11112-02-07-03.

At step 11112-02-07-03, the processor 11111 waits for replies to the message sent to all of the modules at step 11112-02-07-02. Upon confirming replies from all of the modules, the processor 11111 advances to step 11112-02-07-04.

At step 11112-02-07-04, the processor 11111 calculates the sum of the values of the capacity pool capacities and the free capacities of each of the modules, which are attached to the reply messages received at step 11112-02-07-03, and it then proceeds to step 11112-02-07-05.

At step 11112-02-07-05, the processor 11111 sends the sum of the capacity pool capacities and the free capacities of all of the modules, as determined at step 11112-02-07-04, to the host computer 10000 and/or the storage management terminal 11010. Thereupon, the processor 11111 terminates the capacity pool state collection control 11112-02-07.

Fig. 19 is a flowchart of the virtual volume creation process 11112-03-02.

Firstly, in the storage module 11100, when the processor 11111 has started execution of the virtual volume creation process 11112-03-02, the processor 11111 then advances to step 11112-03-02-01. At step 11112-03-02-01, the processor 11111 detects the record corresponding to the capacity pool associated with the virtual volume that is to be created, as indicated by the capacity pool number 11112-14-04, from the capacity pool structure management table 11112-14, and confirms whether the capacity pool associated with the virtual volume to be created exists, by investigating whether the value "Yes" is stored in the capacity pool creation indicator information 11112-14-05 of the corresponding record. If it is found that as a result of this confirmation that the capacity pool in question does exist, then the processor 11111 advances to step 11112-03-02-02, whereas if it does not exist, then an error is issued.

At step 11112-03-02-02, the processor 11111 detects the record corresponding to the number of the volume to be created, as indicated by the volume number 11112-12-01, in the volume management table 11112-12, and it confirms that the volume to be created is unused, by checking that no information has been registered in the pool number 11112-12-02 and the RAID group number 11112-12-03 of the corresponding record. If it is found as a result of this confirmation that the volume in question is unused, then the processor 11111 advances to step 11112-03-02-03, whereas if it is not unused, then an error is issued.

At step 11112-03-02-03, the processor 11111 initializes the virtual volume assignment region management table 11112-13, thereby creating a state where there is no assignment of the storage region of the capacity pool, to the virtual volume that is to be created. The processor 11111 then advances to step 11112-03-02-04. At step 11112-03-02-04, the processor 11111 carries out registration processing in the volume management table 11112-12.

Here, the processor 11111 registers the identifier of the capacity pool associated with the volume number 11112-12-01, as the pool number 11112-12-02 of the record corresponding to the virtual volume being created. Subsequently, the processor 11111 terminates the virtual volume creation process 11112-03-02.

Fig. 20 is a flowchart of the virtual volume migration control 11112-03-03.

Firstly, in the storage module 11100, when the processor 11111 has started execution of the virtual volume migration control 11112-03-03, the processor 11111 then advances to step 11112-03-03-01. At step 11112-03-03-01, the processor 11111 selects the storage module to receive transmission, and then sends a "virtual volume creation request" message to that storage module. The processor 11111 may select the storage module having the larger free capacity in the capacity pool, as the target of the message. Thereupon, the processor 11111 advances to step 11112-03-03-02.

At step 11112-03-03-02, the processor 11111 waits for the arrival of a completion reply in response to the message sent at step 11112-03-03-01, and when the reply arrives, it advances to step 11112-03-03-03.

At step 11112-03-03-03, the processor 11111 executes the replication process 11112-03-07 shown in Fig. 24, in order to copy the data stored in the virtual volume that is to be migrated, from the associated capacity pool of the same module, to the capacity pool of the storage module that is the object of migration. The processor 11111 then advances to step 11112-03-03-04.

At step 11112-03-03-04, the processor 11111 executes the I/O suspending process 11112-04-01 shown in Fig. 10 and Fig. 25, in order to suspend temporarily an I/O relating to the virtual volume forming the migration object. After completing the I/O suspending process 11112-04-01, the processor 11111 advances to step 11112-03-03-05.

At step 11112-03-03-05, the processor 11111 checks the update indicator information 11112-13-04 of the record corresponding to the copy source volume, in the virtual volume assignment region management table 11112-13, to confirm whether or not it is "Yes", in other words, whether or not there is a difference. If, as a result of this confirmation, the update indicator information 11112-13-04 is "Yes", then the processor 11111 advances to step 11112-03-03-06, and if it is not "Yes", then this means that the virtual volume has been replicated completely in another storage module, and hence the processor 11111 advances to step 11112-03-03-07.

At step 11112-03-03-06, in order to restart the I/O relating to the virtual volume that forms the migration object, the I/O starting process 11112-04-02 shown in Fig. 9 and Fig. 26 is executed, and the processor 11111 then advances to step 11112-03-03-03.

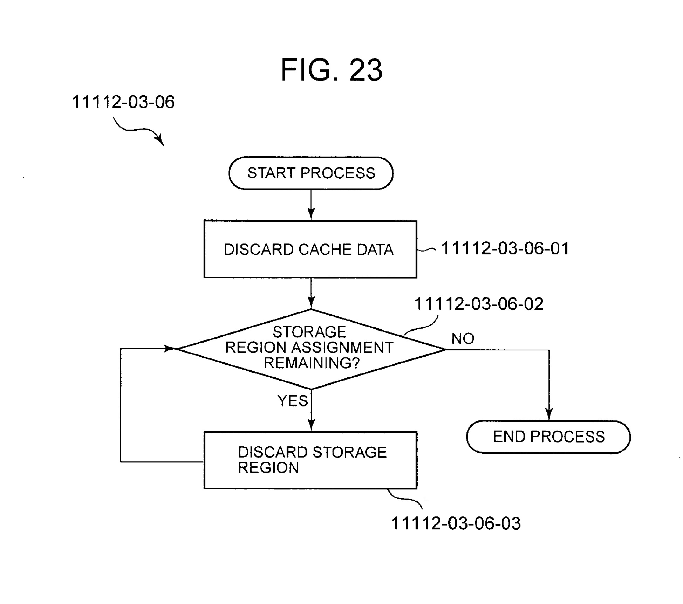

At step 11112-03-03-07, the processor 11111 executes processing for deleting the virtual volume forming the migration object in the migration source storage module (the same storage module as the processor 11111). In other words, the processor 11111 executes the storage region release process 11112-03-06 shown in Fig. 23, which is described below, to release the storage region assigned to the virtual volume forming the migration object, and the processor 11111 then executes the virtual volume deletion process 11112-03-04 shown in Fig. 21, which is described below, to delete the virtual volume forming the migration object, from the capacity pool. Subsequently, the processor 11111 terminates the virtual volume migration control 11112-03-03.

Fig. 21 is a flowchart of the virtual volume deletion process 11112-03-04.

Firstly, in the storage module 11100, when the processor 11111 has started the virtual volume deletion process 11112-03-04, the processor 11111 then advances to step 11112-03-04-01. At step 11112-03-04-01, the processor 11111 changes the entry of the pool number 11112-12-02 of the virtual volume forming the deletion object, as registered in the volume management table 11112-12, to an "unregistered state" ("N/A"). Consequently, the volume management table 11112-12 is set to a state where the virtual volume in question is not managed in the capacity pool of the storage module 11100. Subsequently, the processor 11111 terminates the virtual volume deletion process 11112-03-04.

Fig. 22 is a flowchart of a storage region assignment process 11112-03-05.

Firstly, in the storage module 11100, when the processor 11111 has started the storage region assignment process 11112-03-05, the processor 11111 then advances to step 11112-03-05-01. At step 11112-03-05-01, the processor 11111 refers to the capacity pool free capacity 11112-14-06 of the capacity pool structure management table 11112-14, and confirms whether or not the free capacity of the capacity pool is exhausted, in other words, whether or not the capacity pool has the free capacity required to assign the storage region. If it is confirmed that the free capacity required for assignment does exist, then the processor 11111 advances to step 11112-03-05-02, and if it cannot be confirmed, then the processor 11111 advances to step 11112-03-05-04.

At step 11112-03-05-02, the processor 11111 identifies the RAID groups corresponding to the capacity pool associated with the virtual volume which is the object of storage region assignment, from the capacity pool structure management table 11112-14, and it selects a suitable RAID group from the identified RAID groups, selects the address of a suitable storage region from the free region information 11112-14-03 in the record corresponding to the selected RAID group, and deletes the address of this selected storage region, from the free region information 11112-14-03.

Subsequently, the processor 11111 selects the storage region number of the virtual volume assigned to the data in question, from the storage region assignment source number 11112-13-01 in the virtual volume assignment region management table 11112-13, stores the RAID group number relating to the selected storage region, in the storage region assignment target RAID group number 11112-13-02 of the record containing the selected storage region number, stores the header address of the selected storage region, in the storage region assignment target number 11112-13-03 of the corresponding record, and stores "Yes" as the update indicator information 11112-13-04 of that record. Thereupon, the processor 11111 advances to step 11112-03-05-03.

At step 11112-03-05-03, the processor 11111 confirms whether or not it is predicted that the free capacity of the capacity pool will be exhausted, by confirming whether or not the capacity pool free capacity 11112-14-06 of the capacity pool structure management table 11112-14 is less than a previously established threshold value. The threshold value may be changed dynamically in accordance with the total capacity of the virtual volume inside the module in question, and/or the ratio of the capacity pool of the module. If, as a result of this confirmation, the free capacity is less than the threshold value, then this means that there is a high probability that the capacity pool will become exhausted, and therefore, the processor 11111 advances to step 11112-03-05-04, whereas if the free capacity is equal to or greater than the threshold value, then the storage region assignment process 11112-03-05 is terminated.

At step 11112-03-05-04, the processor 11111 selects a virtual volume forming a migration object and a storage module forming a migration target, in order to increase the free capacity of the capacity pool. Desirably, a virtual volume having particular characteristics, for example, one where the size of the storage region of the assigned capacity pool is large, one having a high access frequency, or one which is not required to have very high I/O performance, or the like, is selected as the virtual volume to be migrated. Furthermore, if there are a plurality of storage modules which could form the migration target, then desirably, a storage module having particular characteristics, such as a large free capacity of the capacity pool, is selected as the migration target storage module. Thereupon, the processor 11111 advances to step 11112-03-05-05.

At step 11112-03-05-05, the processor 11111 issues a "virtual volume migration" command to itself, in order to migrate the virtual volume selected at step 11112-03-05-04, to the selected storage module. Thereupon, the processor 11111 terminates the storage region assignment process 11112-03-05.

Fig. 23 is a flowchart of the storage region release process 11112-03-06.

Firstly, in the storage module 11100, when the processor 11111 has started the storage region release process 11112-03-06, the processor 11111 then advances to step 11112-03-06-01. At step 11112-03-06-01, the processor 11111 invalidates the control information corresponding to the volume that is the object of storage region release, as managed in the cache region management table 11112-15, thereby discarding the cache data of that volume which was stored in the cache region 11112-20. Thereupon, the processor 11111 advances to step 11112-03-06-02.

At step 11112-03-06-02, the processor 11111 confirms whether or not information assigning the storage region is stored in the storage region assignment target RAID group number 11112-13-02 and the storage region assignment target 11112-13-03, of the virtual volume assignment region management table 11112-13 corresponding to the volume forming the object of storage region release process. If there is assignment information, as a result of this confirmation, then the processor 11111 advances to step 11112-03-06-03, whereas if there is no assignment information, then it terminates the storage region release process 11112-03-06.

At step 11112-03-06-03, the processor 11111 carries out an operation with respect to the information of the storage region determined by the step 11112-03-06-02. More specifically, firstly, in order to delete the association with storage region which is to be released, the processor 11111 stores an invalid value in the storage region assignment target RAID group number 11112-13-02 and the storage region assignment target number 11112-13-03 of the record corresponding to the storage region in question, in the virtual volume assignment region management table 11112-13. Thereupon, in order to return the storage region in question to the capacity pool, the processor 11111 searches the capacity pool structure management table 11112-14 for the record where the RAID group number 11112-14-01 indicates the RAID group which was stored as the storage region assignment target RAID group number 11112-13-02, and it registers the storage region which was stored in the storage region assignment target number 11112-13-03, as the free capacity information 11112-14-03 of that record, and adds the free capacity corresponding to this registered storage region to the capacity pool free capacity 11112-14-06 of the record of the corresponding capacity pool. Thereby, the storage region that was previously assigned becomes a free region and can be used for storage region assignment in the capacity pool. Thereupon, the processor 11111 advances to step 11112-03-06-02.

Fig. 24 is a flowchart of the data replication process 11112-03-07.

Firstly, in the storage module 11100, when the processor 11111 has started the data replication process 11112-03-07, the processor 11111 then advances to step 11112-03-07-01. At step 11112-03-07-01, the processor 11111 performs initialization by setting all of the update indicator information 11112-13-04 corresponding to the copy source volume in the virtual volume assignment region management table 11112-13, to "Yes". Thereupon, the processor 11111 advances to step 11112-03-07-02.

At step 11112-03-07-02, the processor 11111 investigates the update indicator information 11112-13-04 corresponding to the copy source volume, and confirms whether or not the value is "Yes", in other words, whether or not there is a difference. If, as a result of this confirmation, the update indicator information 11112-13-04 does not have a value of "Yes", then the processor 11111 terminates the data replication process 11112-03-07, whereas if it does have a value of "Yes", then the processor 11111 advances to step 11112-03-07-03.

At step 11112-03-07-03, the processor 11111 designates the storage region associated with the "Yes" value determined at step 11112-03-07-02, as the copy source, and then advances to step 11112-03-07-04.

At step 11112-03-07-04, the processor 11111 refers to the storage region assignment target RAID group number 11112-13-02 and the storage region assignment target number 11112-13-03 relating to the storage region designated as the copy source in step 11112-03-07-03, and confirms whether or not the storage region has been assigned. If, as a result of this confirmation, the storage region has not been assigned, then the processor 11111 advances to step 11112-03-07-10, and if the storage region has been assigned, then the processor 11111 advances to step 11112-03-07-05.

At step 11112-03-07-05, the processor 11111 confirms whether the data of the copy source storage region is stored on the cache region 11112-20, by searching the cache region management table 11112-15. If, as a result of this confirmation, the data is stored on the cache region 11112-20, then the processor 11111 advances to step 11112-03-07-09, and if it is not stored, then the processor 11111 advances to step 11112-03-07-06.

At step 11112-03-07-06, the processor 11111 searches the cache region management table 11112-15, reserves a free region of the cache region 11112-20, and then advances to step 11112-03-07-07.

At step 11112-03-07-07, the processor 11111 identifies the data storage position on the HDDs 11161, by referring to the storage region assignment target RAID group number 11112-13-02 and the storage region assignment target number 11112-13-03. Thereupon, the processor 11111 advances to step 11112-03-07-08.

At step 11112-03-07-08, the processor 11111 transfers the data on the HDD 11161 where the copy source storage region is stored, to the region on the cache region 11112-20 that was reserved in step 11112-03-07-07. Thereupon, the processor 11111 advances to step 11112-03-07-09.

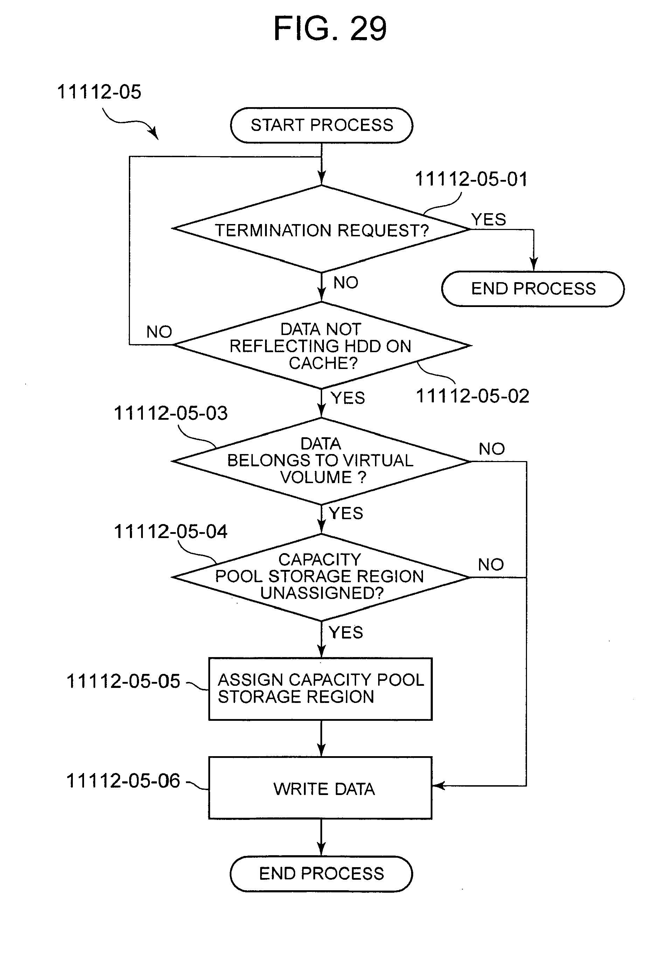

At step 11112-03-07-09, the processor 11111 transfers the data of the copy source storage region, which has been stored on the cache region 11112-20, to the cache region 11112-20 of the storage module holding the copy target volume, by means of the cable which links the storage module connection interface 11113 with the storage module connection interface 11213. Accordingly, in the storage module forming the transfer target, by executing the processing shown in Fig. 29, which is described below, the data of the storage region forming the copy source is assigned to and stored in a storage region of the capacity pool of the storage module, and a virtual volume assignment region management table 11112-13 is created, which associates the newly assigned RAID group number and the identification information of the assigned storage region, with the data position of the virtual volume. Thereupon, the processor 11111 advances to step 11112-03-07-10.

At step 11112-03-07-10, the processor 11111 stores "No" in the update indicator information 11112-13-04 of the record corresponding to the copy source storage region in the virtual volume assignment region management table 11112-13. Thereupon, the processor 11111 returns to step 11112-03-07-02.

Fig. 25 is a flowchart of the I/O suspending process 11112-04-01.

Firstly, in the storage module 11100, when the processor 11111 has started the I/O suspending process 11112-04-01, the processor 11111 then advances to step 11112-04-01-01. At step 11112-04-01-01, the processor 11111 searches the volume management table 11112-12 for the record which has the volume number corresponding to the volume in question, as the volume number 11112-12-01, and stores "ON" in the I/O suspend judgment information 11112-12-05 of that record. Subsequently, the processor 11111 terminates the I/O suspending process 11112-04-01.

Fig. 26 is a flowchart of the processing sequence of the I/O starting process 11112-04-02.

Firstly, in the storage module 11100, when the processor 11111 has started the I/O starting process 11112-04-02, the processor 11111 then advances to step 11112-04-02-01. At step 11112-04-02-01, the processor 11111 searches the volume management table 11112-12 for the record which has the volume number corresponding to the volume in question, as the volume number 11112-12-01, and stores "OFF" in the I/O suspend judgment information 11112-12-05 of that record. Subsequently, the processor 11111 terminates the I/O starting process 11112-04-02.

Fig. 27 is a flowchart of a write I/O process 11112-04-03.

Firstly, in the storage module 11100, when the processor 11111 has started the write I/O process 11112-04-03, the processor 11111 then advances to step 11112-04-03-01. At step 11112-04-03-01, in order to judge whether or not I/O processing is executable, the processor 11111 confirms the I/O suspend judgment information 11112-12-05 of the record corresponding to the volume concerned, in the volume management table 11112-12. If, as a result of this confirmation, the value "OFF" is stored, then the processor 11111 advances to step 11112-04-03-02 in order to execute the I/O processing. On the other hand, if "ON" is stored, then the processor 11111 waits until it changes to "OFF" before executing the next process.

In step 11112-04-03-02, the processor 11111 confirms whether a data storage region has already been reserved on the cache region 11112-20, by searching the cache region management table 11112-15. If, as a result of this confirmation, the data storage region has not yet been reserved, then the processor 11111 advances to step 11112-04-03-03, and if it has already been reserved, then the processor 11111 advances to step 11112-04-03-04.

At step 11112-04-03-03, the processor 11111 searches for a free region of the cache region 11112-20, from the cache region management table 11112-15, reserves this free region, and then advances to the step 11112-04-03-04.

At step 11112-04-03-04, the processor 11111 stores the information "ON" in the virtual volume assignment management table 11112-12, as the update indicator information 11112-13-04 of the record corresponding to the data position which is to be written to in the current write process. Thereupon, the processor 11111 advances to step 11112-04-03-05.

At step 11112-04-03-05, the processor 11111 stores the data transferred from the host computer 10000, in the cache region 11112-20. Subsequently, the processor 11111 terminates the write I/O process 11112-04-03.

Fig. 28 is a flowchart of a read I/O process 11112-04-04.

Firstly, in the storage module 11100, when the processor 11111 has started the read I/O process 11112-04-04, the processor 11111 then advances to step 11112-04-04-01. At step 11112-04-04-01, in order to judge whether or not I/O processing is executable, the processor 11111 confirms the I/O suspend judgment information 11112-12-05 of the record corresponding to the volume concerned, in the volume management table 11112-12. If, as a result of this confirmation, the value "OFF" is stored, then the processor 11111 advances to step 11112-04-04-02 in order to execute the I/O processing. On the other hand, if "ON" is stored, then the processor 11111 waits until it changes to "OFF" before executing the process.

In step 11112-04-04-02, the processor 11111 confirms whether the data that is the object of read-out is stored on the cache region 11112-20, by searching the cache region management table 11112-15. If, as a result of this confirmation, the data has been stored, then the processor 11111 advances to step 11112-04-04-03, and if it has not yet been stored, then the processor 11111 advances to step 11112-04-04-07.

At step 11112-04-04-03, the processor 11111 searches for a free region of the cache region 11112-20, from the cache region management table 11112-15, and reserves this free region. Thereupon, the processor 11111 advances to step 11112-04-04-04.

At step 11112-04-04-04, the processor 11111 searches the virtual volume assignment region management table 11112-13 for the record which has the number of the region forming the I/O object, as the storage region assignment source number 11112-13-01, and it confirms whether or not values have been stored in the storage region assignment target RAID group number 11112-13-02 and the storage region assignment target number 11112-13-03 of the corresponding record. If, as a result of the confirmation, values have not been stored, then the processor 11111 recognizes that the storage region is unassigned and advances to step 11112-04-04-05, whereas if values have been stored, then the processor 11111 recognizes that the storage region has been assigned, and it advances to step 11112-04-04-06.

At step 11112-04-04-05, the processor 11111 fills the region of the cache region 11112-20 that was reserved in step 11112-04-04-03, with the data "0". Thereupon, the processor 11111 advances to step 11112-04-04-07.

At step 11112-04-04-06, the processor 11111 transfers data from the HDDs 11161 corresponding to the storage region determined in step 11112-04-04-04, to the region of the cache region 11112-20 that was reserved in step 11112-04-04-03. Thereupon, the processor 11111 advances to step 11112-04-04-07.

At step 11112-04-04-07, the processor 11111 transfers the data stored in the cache region 11112-20, to the host computer 10000. Subsequently, the processor 11111 terminates the read I/O process 11112-04-04.

Fig. 29 is a flowchart of the HDD operation program 11112-05.

The HDD operation program 11112-05 starts to be executed by the processor 11111 each time a prescribed period has elapsed, for example.

Firstly, in the storage module 11100, when the processor 11111 has started the HDD operation program 11112-05, the processor 11111 then advances to step 11112-05-01. At step 11112-05-01, the processor 11111 judges whether or not there is a program termination request associated with a power switch off, or the like. If there is a termination request, then the processor 11111 terminates processing. On the other hand, if there is no termination request, then the processor 11111 advances to step 11112-05-02.

At step 11112-05-02, the processor 11111 searches the cache region management table 11112-15 for data where there is a mismatch between the data stored on the cache region 11112-20 and the data on the corresponding HDD 11161. If such data does not exist, then the processor 11111 returns to the step 11112-05-01, and if it does exist, then the processor 11111 advances to the step 11112-05-03.

At step 11112-05-03, the processor 11111 confirms whether or not the data determined at step 11112-05-02 is data belonging to a virtual volume, by determining whether or not a capacity pool identifier has been stored in the pool number 11112-12-02 of the record corresponding to the volume number of the data in question, in the volume management table 11112-12. If, as a result of this confirmation, a capacity pool identifier is stored, then the processor 11111 advances to step 11112-05-04, and if it is not stored, then the processor 11111 advances to step 11112-05-06.

At step 11112-05-04, the processor 11111 confirms whether a storage region has already been assigned to the data region in question, on the basis of the values of the storage region assignment target RAID group number 11112-13-02 and the storage region assignment target number 11112-13-03 in the record which corresponds to the storage region assignment source number relating to the data region in question, in the virtual volume assignment region management table 11112-13. If, as a result of this confirmation, values are stored, then the processor 11111 advances to step 11112-05-06, and if they are not stored, then the processor 11111 advances to step 11112-05-05.

At step 11112-05-05, the processor 11111 executes the storage region assignment process 11112-03-05 shown in Fig. 22, and it then advances to step 11112-05-06.

At step 11112-05-06, the processor 11111 transfers data from the cache region 11112-20 to the HDD 11161 that is the data write object. Furthermore, at the same time, the processor 11111 registers the fact that the data on the cache region 11112-20 and the data on the HDD 11161 are matching, in the cache region management table 11112-15. Consequently, the processor 11111 terminates the execution of the HDD operation program 11112-05.

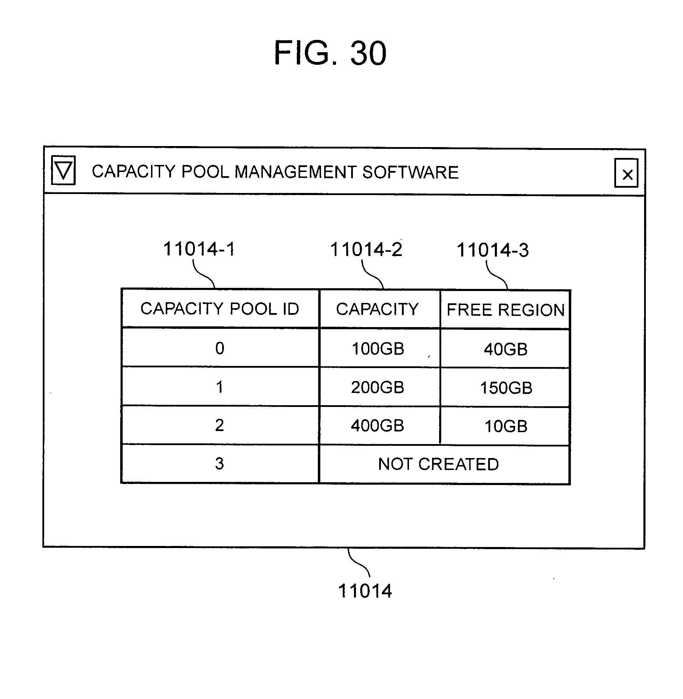

Fig. 30 is an output screen of a user interface 11014 of the storage management terminal 11010.

The processor 11011 of the storage management terminal 11010 issues a "capacity pool state acquisition" command to the respective storage modules 11100, in order to acquire the state of any capacity pools. Furthermore, the processor 11011 acquires the total capacity and the total free capacity of the respective capacity pools, and as shown in Fig. 30, the ID of each capacity pool is displayed in the capacity pool ID 11014-1, together with the total capacity of the respective capacity pool, which corresponds to the capacity pool total capacity 11014-2, and the total free capacity of the respective capacity pool, which corresponds to the capacity pool total free capacity 11104-3. For users who wish to acquire detailed information on the user interface 11014, it is possible to prepare a separate screen which displays the capacity and the free capacity of the individual modules, in such a manner that the processor 11011 is able to display this screen.

According to the first embodiment described above, if it is determined that the capacity pool is exhausted, then it is possible to increase the free capacity of the capacity pool by migrating the data in the capacity pool to the capacity pool of another storage module, and hence exhaustion of the capacity pool can be prevented appropriately, and situations such as halting of work tasks as a result of exhaustion of the capacity pool can be prevented. Furthermore, if exhaustion of the capacity pool is predicted, then it is possible to increase the free capacity of the capacity pool, and therefore it is possible to prevent exhaustion of the capacity pool at a subsequent time, more effectively.

### (Second embodiment)

Next, the computer system according to a second embodiment of the present invention will be described. In the drawings and description of the second embodiment, elements which are the same as those of the first embodiment are labeled with the same reference numerals and the description below is centered on those features which are different from the first embodiment.

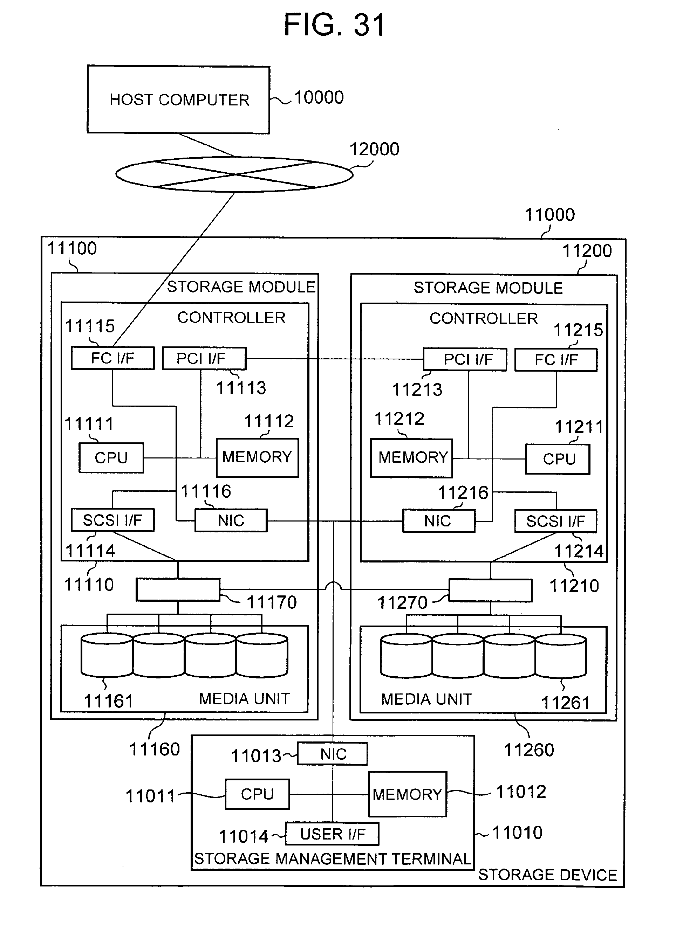

Fig. 31 is a diagram showing an example of the composition of a computer system according to a second embodiment of the present invention.

The storage module 11100 according to the second embodiment comprises a switch 11170, in addition to a media unit 11160 and a controller 11110. Furthermore, the storage module 11200 comprises a switch 11270, in addition to a media unit 11260 and a controller 11210.

The switch 11170 is connected to an HDD connection interface 11114 and to hard disk drives 111161. The switch 11260 is connected to an HDD connection interface 11214 and to hard disk drives 111161. Moreover, the switch 11160 and the switch 11260 are connected to each other. By adopting a composition of this kind, it is possible for the controller 11110 to access the hard disk drives 11261 of the media unit 11260, via the switches 11170 and 11270, and for the controller 11210 to access the hard disk drives 11161 of the media unit 11160, via the switches 11270 and 11170.

In the second embodiment, the storage module 11100 and the storage module 11200 hold the same contents in the RAID group management table 11112-11, in such a manner that the numbers of the HDDs 11161 and 11261 provided in either of the storage modules can be stored in the HDD number list 11112-11-03. Consequently, one storage module is able to ascertain the HDDs belonging to the RAID group provided on the other storage module.

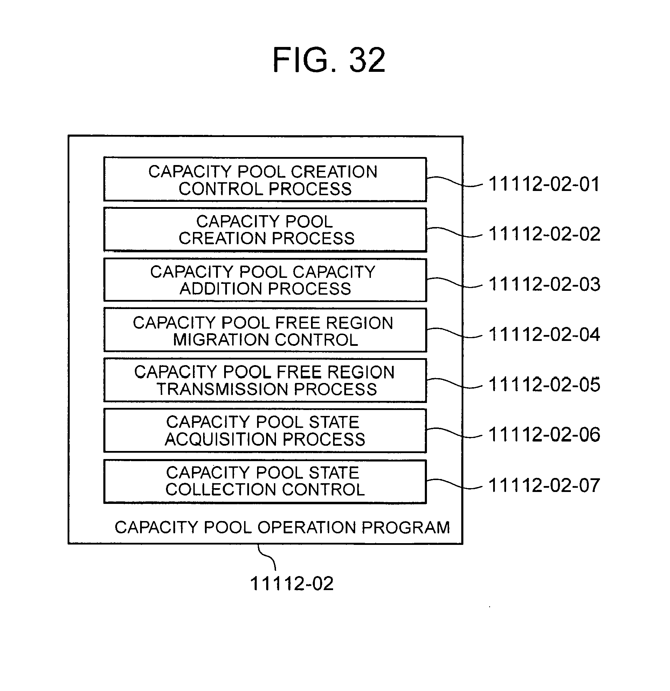

Fig. 32 is a schematic drawing of processing which constitutes the pool operation program 11112-02 according to the second embodiment. The following description centers on the differences with respect to the pool operation program 11112-02 shown in Fig. 8 relating to the first embodiment.

The pool operation program 11112-02 according to the second embodiment comprises: a capacity pool creation control process 11112-02-01, a capacity pool creation process 11112-02-02, a capacity pool capacity addition process 11112-02-03, a capacity pool state acquisition process 11112-02-06 and capacity pool state collection control 11112-02-07, and in addition to these, it also comprises capacity pool free region migration control 11112-02-04 and a capacity pool free region transmission process 11112-02-05.

The capacity pool free region migration control 11112-02-04 is a control process for adding a free region from the capacity pool managed by another storage module, to the capacity pool managed by the storage module executing the process. The capacity pool free region transmission process 11112-02-05 is a process which reports the free region of the capacity pool managed by the same storage module, to the other storage module.

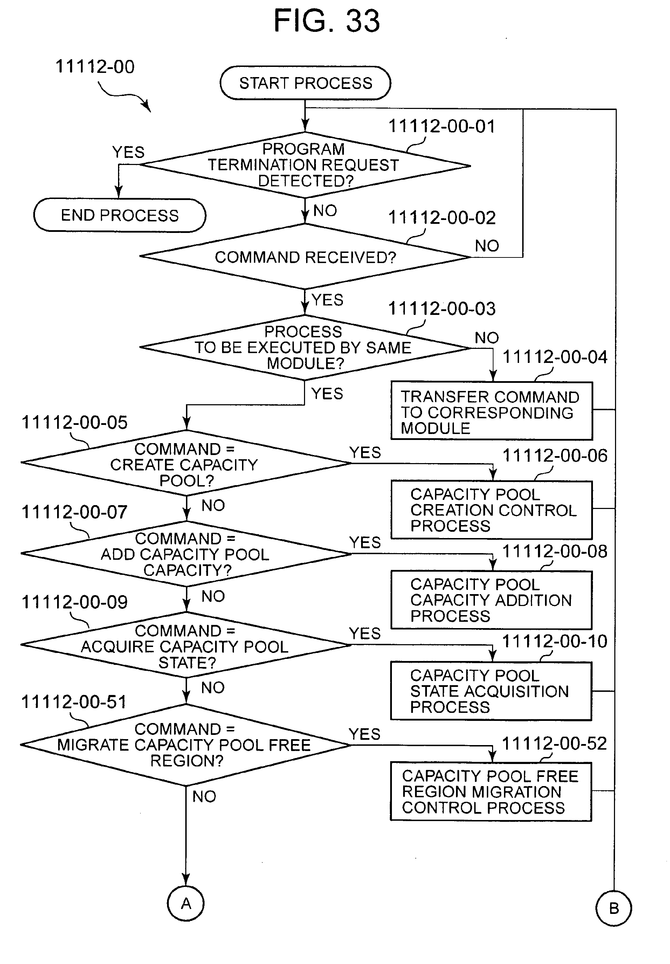

Fig. 33 is a flowchart showing the processing sequence of the command processing program 11112-00 according to the second embodiment. The following description centers on the differences with respect to the command processing program 11112-00 shown in Fig. 11 relating to the first embodiment.

At step 11112-00-09, the processor 11111 judges whether or not the requested command is "acquire state of capacity pool". If the command is "acquire state of capacity pool", then the processor 11111 advances to step 11112-00-10, and if it is another command, then the processor 11111 advances to step 11112-00-51.

At step 11112-00-51, the processor 11111 judges whether or not the requested command is "migrate free capacity of capacity pool". If the command is "migrate free capacity of capacity pool", then the processor 11111 advances to step 11112-00-52, and if it is another command, then the processor 11111 advances to step 11112-00-15 in Fig. 12. The processor 11111 may also advance to step 11112-00-13 in Fig. 11, rather than advancing to step 11112-00-15.

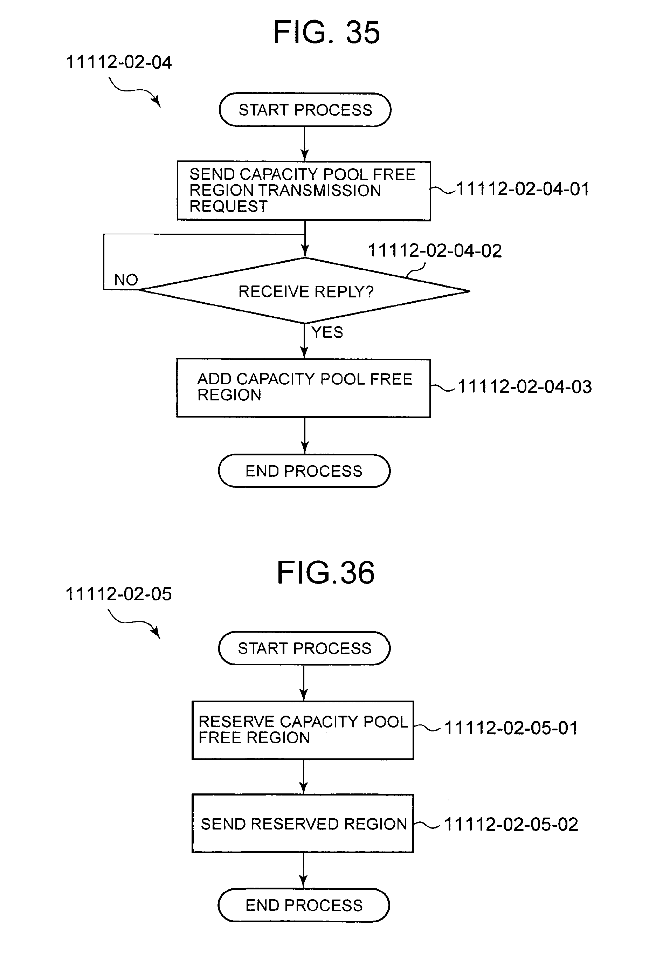

At step 11112-00-51, the processor 11111 executes the pool free region migration control 11112-02-04 shown in Fig. 32 and Fig. 35. Thereupon, the processor 11111 returns to step 11112-00-01.

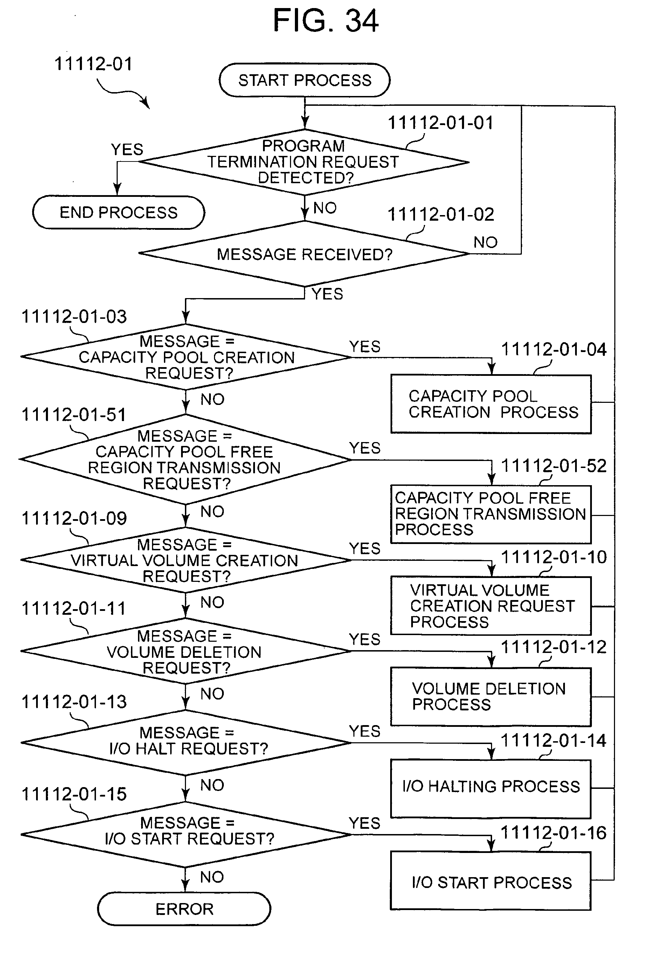

Fig. 34 is a flowchart showing the processing sequence of the message reception processing program 11112-01 according to the second embodiment. The following description centers on the differences with respect to the message reception processing program 11112-01 shown in Fig. 13 which relates to the first embodiment.

At step 11112-01-03, the processor 11111 judges whether or not the received message is a "capacity pool creation request". If the message is a "capacity pool creation request", then the processor 11111 advances to step 11112-01-04, and if it is another message, then the processor 11111 advances to step 11112-01-51.

At step 11112-01-51, the processor 11111 judges whether or not the received message is a "capacity pool free region transmission request". If the message is a "capacity pool free capacity transmission creation request", then the processor 11111 advances to step 11112-01-52, and if it is another message, then the processor 11111 advances to step 11112-01-09. The procedure may also advance to step 11112-01-07 in Fig. 13, rather than advancing to step 11112-01-09.

At step 11112-01-52, the processor 11111 executes the capacity pool free region transmission process 11112-02-05 shown in Fig. 33 and Fig. 36. Thereupon, the processor 11111 returns to step 11112-01-01.

Fig. 35 is a flowchart of the capacity pool free region migration control 11112-02-04.

Firstly, in the storage module 11100, when the processor 11111 has started execution of the capacity pool free region migration process 11112-02-04, the processor 11111 then advances to step 11112-02-04-01. At step 11112-02-04-01, the processor 11111 selects the storage module forming the transmission target, and then sends a "capacity pool free region transmission request" message to that storage module. If communications are enabled with respect to a plurality of storage modules, then the storage module having the largest free capacity in the capacity pool may be selected as the storage module forming the transmission target of the message. Thereupon, the processor 11111 advances to step 11112-02-04-02.

At step 11112-02-04-02, the processor 11111 waits for the arrival of a completion reply in response to the message sent in step 11112-02-04-01. When the reply has arrived, the processor 11111 advances to step 11112-02-04-03.

At step 11112-02-04-03, the processor 11111 stores the free capacity information, described below, which is appended to the reply message received at step 11112-02-04-02, in the capacity pool structure management table 11112-14. In other words, the processor 11111 stores the RAID group number of the free region stated in the free region information, as the RAID group number 11112-14-01, stores the number of the capacity pool to which the free region has been added, as the capacity pool number 11112-14-02, stores an address indicating the free region, as the free region information 11112-14-03, and adds the additional capacity to the capacity value stored as the capacity pool free capacity 11112-14-06 and stores the resulting capacity value. By this means, it is possible to use the storage region of the HDDs 11261 provided in the other storage module 11200, as a storage region for assignment in the capacity pool. In the present embodiment, the processor 11111 accesses the HDDs 11261 which are made available in this way, by means of the switches 11170 and 11270. Subsequently, the processor 11111 terminates the processing of the capacity pool free region migration control 11112-02-04.

Fig. 36 is a flowchart showing the processing sequence of the capacity pool free region transmission process 11112-02-05. Firstly, in the storage module 11100, when the processor 11111 has started execution of the capacity pool free region transmission process 11112-02-05, the processor 11111 then advances to step 11112-02-05-01. At step 11112-02-05-01, the processor 11111 searches the capacity pool structure management table 11112-14 of the same module, reserves a free region of a suitable size in any of the RAID groups, and then deletes the address indicating the reserved free region, from the free region information 11112-14-03 of the record corresponding to the RAID group in question, in the capacity pool structure management table 11112-14, as well as deducting the reserved capacity from the capacity pool free capacity 11112-14-06 of the corresponding record. Thereupon, the processor 11111 advances to step 11112-02-05-02.

At step 11112-02-05-02, the processor 11111 sends information relating to the free region that was reserved at step 11112-02-05-01, for example, information indicating the RAID group number, the capacity pool number, the address and the capacity, as an attachment to a reply message, to the storage module which issued the "capacity pool free region transmission request" message at step 11112-02-04-01 shown in Fig. 35. Subsequently, the processor 11111 terminates the capacity pool free region transmission process 11112-02-05.

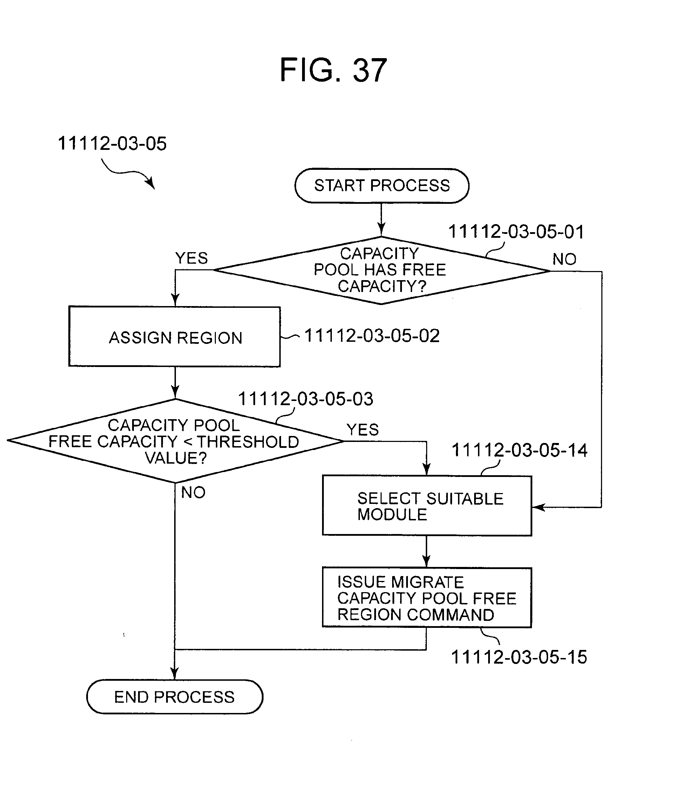

Fig. 37 is a flowchart of a storage region assignment process 11112-03-05 according to the second embodiment. The following description centers on the differences with respect to the storage region assignment process 11112-03-05 shown in Fig. 22 relating to the first embodiment. The storage region assignment process 11112-03-05 according to the second embodiment is executed at step 11112-04-05-05 in Fig. 29, instead of the storage region assignment process 11112-03-05 shown in Fig. 22.

At step 11112-03-05-03, the processor 11111 confirms whether or not the capacity pool free capacity 11112-14-06 in the capacity pool structure management table 11112-14 is less than a previously established threshold value. If, as a result of this confirmation, the free capacity is less than the threshold value, then this means that there is a high probability that the capacity pool will become exhausted, and therefore, the processor 11111 advances to step 11112-03-05-14, whereas if the free capacity is equal to or greater than the threshold value, then the storage region assignment process 11112-03-05 is terminated.

At step 11112-03-05-14, the processor 11111 selects another storage module which is suitable as the migration source (provision source) of capacity pool free capacity, in order to increase the free capacity of the capacity pool. Here, it is desirable to select a storage module having a capacity pool with a large free capacity, as the storage module forming the migration source. Thereupon, the processor 11111 advances to step 11112-03-05-15.

At step 11112-03-05-15, the processor 11111 issues a "migrate capacity pool free region" command to the same module, in order to migrate the free region of the capacity pool in the storage module that was selected at step 11112-03-05-14. According to the present invention, after this, the capacity pool free region migration control 11112-02-04 in Fig. 35 is started. Thereupon, the processor 11111 terminates the storage region assignment process 11112-03-05.

According to the second embodiment described above, if it is determined that the capacity pool of a certain module is exhausted, then it is possible to increase the free capacity of the capacity pool of that module by acquiring the free capacity of the capacity pool of another storage module, and hence exhaustion of the capacity pool can be prevented appropriately, and situations such as halting of work tasks as a result of exhaustion of the capacity pool can be prevented. Furthermore, if exhaustion of the capacity pool is predicted, then it is possible to increase the free capacity of the capacity pool, and therefore it is possible to prevent exhaustion of the capacity pool at a subsequent time, more effectively. Furthermore, according to the second embodiment, since the actual data that is managed by the virtual volume belonging to the capacity pool does not need to be sent to the other storage module, then it is possible to increase the free capacity of the capacity pool, rapidly. Moreover, according to the second embodiment, the host computer 10000 is able to access virtual volume data belonging to the capacity pool, by always issuing an access request to one storage module, without being aware of the actual storage module forming the storage destination of the data.

The present invention was devised on the basis of a plurality of embodiments above, but the present invention is not limited to the embodiments described above and it may also be applied to various other embodiments.

For example, in the first embodiment described above, if one storage module receives a command that is not addressed to that module, then by sending the command to another storage module, it is able to access the data of a virtual volume which has been migrated to the other storage module, but the present invention is not limited to this, and it is, for example, possible to report the storage module forming the migration target of a virtual volume that has been migrated, to the host computer, in such a manner that the host computer can issue an access request relating to the virtual volume, to the storage module thus reported.

Furthermore, in the second embodiment described above, by connecting the controller 11110 of the storage module 11100 and the media unit 11260 of the other storage module 11210 by means of the switch 11170 and the switch 11270, the controller 11110 of the storage module 11100 is able to access the HDDs 11261 of the media unit 11260, directly, without passing via the controller 11210 of the storage module 11200, and therefore it is possible suitably to prevent increase in the load on the controller 11210, and the potential effects of a failure in the controller 11210, or the like. However, the present invention is not limited to this, and for example, it is also possible for the controller 11110 to access the media unit 11260 via the controller 11210, and in this way as well, since it is not necessary to send the actual data managed by the virtual volume, then the free capacity of the capacity pool can be increased rapidly.

## Claims

1. A storage module that manages a capacity pool comprising at least a portion of a storage region of a plurality of data storage media; comprising:
a capacity pool management table that manages a free storage region of the storage region of the capacity pool;
an adjustment judging unit that judges whether or not a capacity of the free storage region of the capacity pool matches a condition for carrying out capacity adjustment of the free storage region of the capacity pool; and
a free capacity increasing unit that, if the adjustment judging unit judges that the condition is matched, increases the capacity of the free storage region in the capacity pool by using a storage region of a data storage medium that is under the management of another storage module.

2. The storage module according to claim 1, wherein the condition for carrying out capacity adjustment of the free storage region of the capacity pool is that the capacity of the free storage region of the capacity pool is exhausted.

3. The storage module according to claim 1, wherein the condition for carrying out capacity adjustment of the free storage region of the capacity pool is a prediction of exhaustion of the capacity of the free storage region of the capacity pool.

4. The storage module according to claim 3, wherein the adjustment judgment unit judges the matching or non-matching of conditions for predicting exhaustion of the capacity of the free storage region, by determining whether or not the capacity of the free storage region of the capacity pool is equal to or less than a prescribed threshold value.

5. The storage module according to any one of claims 1 to 4, wherein the spare capacity increasing unit increases the capacity of the free storage region of the capacity pool by migrating data stored in the storage region of the capacity pool, to the storage region of the data storage medium that is under the management of the other storage module, and setting the storage region of the data in the storage module to a free storage region.

6. The storage module according to claim 5, further comprising a storage region assignment unit that assigns at least a portion of the storage region of the capacity pool to a virtual volume, wherein
the free capacity increasing unit migrates the data in the storage region assigned to the virtual volume, as a unit, to the storage region that is under the management of the other storage module.

7. The storage module according to claim 6,
wherein the storage region assignment unit is capable of assigning the storage region of the capacity pool to a plurality of virtual volumes;
and the free capacity increasing unit selects a virtual volume for migrating to the storage region that is under the management of the other storage module, on the basis of the capacity of the storage regions assigned to the plurality of virtual volumes.

8. The storage module according to claim 6, wherein the free capacity increasing unit selects the virtual volume for migrating to the storage region that is under the management of the other storage module, on the basis of the access frequency to the plurality of virtual volumes.

9. The storage module according to claim 6, wherein the free capacity increasing unit selects the virtual volume for migrating to the storage region that is under the management of the other storage module, on the basis of the input and output characteristics required of the plurality of virtual volumes.

10. The storage module according to any one of claims 6 to 9, further comprising:
a volume management table that associates and manages the capacity pools and the virtual volumes to that the storage regions of the capacity pools are assigned; and
a table management unit that deletes the association between the virtual volume and the capacity pool in the volume management table, when the free capacity increasing unit migrates the data in the virtual volume to the storage region that is under the management of the other storage module.

11. The storage module according to claim 10, wherein the table management unit deletes the association between the virtual volume and the capacity pool, after migrating all of the data in the virtual volume, to the other storage module.

12. The storage module according to any one of claims 6 to 11, further comprising:
a reception unit that receives an access request to a prescribed virtual volume;
a virtual volume judgment unit that judges whether or not the virtual volume that is the object of the access request is the virtual volume to that the storage region of the capacity pool of the storage module has been assigned; and
an access request transfer unit, that transfers the access request to the other storage module, if the judgment is that the virtual volume is not the virtual volume to that the storage region of the capacity pool of the storage module has been assigned.

13. The storage module according to any one of claims 1 to 12, wherein the free capacity increasing unit increases the capacity of the free storage region of the capacity pool, by adding at least a portion of the free region of the storage region of the data storage medium that is under the management of the other storage module, to the storage region of the capacity pool.

14. The storage module according to claim 13, further comprising:
an access control unit that is capable of accessing data storage media connected by means of a communications path;
wherein the access control unit is connected to the data storage media under the management of the other storage module, by means of a communications path that does not pass via another access control unit that is capable of accessing the data storage media under the management of the other storage module, and the access control unit accesses the storage region of the data storage media under the management of the other storage module, that has been added to the storage region of the capacity pool, by means of the communications path.

15. The storage module according to claim 14, wherein the communications path that does not pass via another access control unit is connected to the data storage region under the control of the other storage module, through a switch.

16. The storage module according to any one of claims 1 to 15, further comprising:
a cache that temporarily stores data that is to be stored in the data storage media, wherein
the adjustment judgment unit carries out judgment when data stored in the cache is stored in the data storage medium.

17. The storage module according to any one of claims 1 to 16, further comprising:
a collecting unit that collects the value of the capacity of the free storage region of the capacity pool, from another storage module that with the storage module can communicate;
an adding unit that adds the value of the capacity of the free storage region of the storage module, to the value of the capacity of the free storage region collected from the other storage module; and
a transmission unit that sends the addition result to an external apparatus.

18. A capacity pool free capacity adjustment method for a storage module that manages a capacity pool comprising at least a portion of a storage region of a plurality of data storage media; comprising:
managing a free storage region of the storage region of the capacity pool;
judging whether or not a capacity of the free storage region of the capacity pool matches a condition for carrying out capacity adjustment of the free storage region of the capacity pool; and
increasing the capacity of the free storage region in the capacity pool by using the storage region of a data storage medium that is under the management of another storage module, if the judgment is that the condition is matched.

19. A storage system comprising a first storage module that manages a capacity pool including at least a portion of a storage region of a plurality of data storage media, and a second storage module that manage a plurality of data storage media,
wherein the first storage module comprises:
a capacity pool management table that manages a free storage region of the storage region of the capacity pool;
an judging unit that judges whether or not the capacity of the free storage region of the capacity pool matches a condition for carrying out capacity adjustment of the free storage region of the capacity pool; and
a free capacity increasing unit that, if the judging unit judges that the condition is matched, increases the capacity of the free storage region of the capacity pool by using the storage region of a data storage medium under the management of the second storage module.

20. A storage system comprising a first storage module and a second storage module that manage a capacity pool including at least a portion of a storage region of a plurality of data storage media, wherein
the first storage module comprises:
a first interface connected to the second storage module,
a first processor connected to the first interface,
a first memory connected to the first processor, and
a first data storage medium that stores data,
the second storage module comprises:
a second interface connected to the first storage module,
a second processor connected to the second interface,
a second memory connected to the second processor, and
a second data storage medium that stores data,
the first memory stores a capacity pool management table that manages a free storage region of the storage region of the first data storage medium, that has been collected into the capacity pool in the first storage module,
the first processor
judges whether the capacity of the free storage region of the capacity pool in the first storage module is exhausted, or is less than a prescribed threshold value,
sends the data of at least one virtual volume to that the storage region of the capacity pool of the first storage module has been assigned, to the second storage module, via the first interface, if the judgment is that the capacity of the free storage region is exhausted or is less than the prescribed threshold value, and
registers the storage region of the first data storage medium that was assigned to the virtual volume, as a free storage region, in the capacity pool management table, after migrating the data of the virtual volume to the second memory of the second storage module, and
the second processor
receives the data from the first storage module via the second interface, and
stores this data in the storage region of the second data storage medium, that is collected into the capacity pool in the second storage module.

21. A storage module that manages a capacity pool comprising at least a portion of a storage region of a plurality of data storage media; comprising:
a capacity pool management table that manages a free storage region of the storage region of the capacity pool; and
a free capacity increasing unit that increases the capacity of the free storage region in the capacity pool by using a storage region of a data storage medium that is under the management of another storage module.
